(19) Europäisches Patentamt
European Patent Office
Office européen des brevets

(11) **EP 1 376 885 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(51) Int Cl.:
***H04B 1/707*** *(2006.01)*

(21) Anmeldenummer: **02013915.0**

(22) Anmeldetag: **24.06.2002**

(54) **Iterative Multiuser-Detektion unter Verwendung von Polynomial-Expansion in CDMA-Systemen**

Iterative multiuser-detection using polynomial expansion in CDMA-systems

Détection itérative d'utilisateurs multiples utilisant une expansion polynomiale dans des systèmes à AMRC

(84) Benannte Vertragsstaaten:
**AT BE CH CY DE DK ES FI FR GB GR IE IT LI LU MC NL PT SE TR**

(43) Veröffentlichungstag der Anmeldung:
**02.01.2004 Patentblatt 2004/01**

(73) Patentinhaber: **UNIVERSITÄT KARLSRUHE, (TECHNISCHE HOCHSCHULE)**
**76128 Karlsruhe (DE)**

(72) Erfinder: **Sessler, Gunther, Dipl.-Ing.**
**76131 Karlsruhe (DE)**

(74) Vertreter: **Grosse, Rainer et al**
**Gleiss Grosse Schrell & Partner**
**Patentanwälte Rechtsanwälte**
**Leitzstrasse 45**
**70469 Stuttgart (DE)**

(56) Entgegenhaltungen:
- **LEI Z D ET AL: "Simplified polynomial-expansion linear detectors for DS-CDMA systems" ELECTRONICS LETTERS, 6 AUG. 1998, IEE, UK, Bd. 34, Nr. 16, Seiten 1561-1563, XP006010150 ISSN: 0013-5194**
- **MOSHAVI S: "MULTI-USER DETECTION FOR DS-CDMA COMMUNICATIONS" IEEE COMMUNICATIONS MAGAZINE, IEEE SERVICE CENTER. PISCATAWAY, N.J, US, Bd. 34, Nr. 10, 1. Oktober 1996 (1996-10-01), Seiten 124-136, XP000694489 ISSN: 0163-6804**

EP 1 376 885 B1

**Beschreibung**

Die Erfindung betrifft ein Verfahren zur iterativen Multiuser-Detektion in CDMA-Systemen unter Verwendung von Polynomial-Expansion-Detektoren und einen Detektor sowie ein entsprechendes Computerprogramm-Erzeugnis und ein entsprechendes computerlesbares Speichermedium, welche insbesondere einsetzbar sind, um die Empfangsqualität in CDMA-basierten Systemen (CDMA = Code Division Multiple Access), insbesondere im Mobilfunkbereich, zu verbessern, bei gleichzeitiger Reduzierung des erforderlichen Rechenaufwandes und damit des gerätetechnischen Aufwandes der dabei eingesetzten Detektoren

Stand der Technik

In CDMA-basierten Systemen (zum Beispiel UMTS, CDMA2000) werden die verschiedenen Nutzer durch Codes - die so genannten Spreizcodes - getrennt. Am Empfänger überlagern sich die Signale der verschiedenen Nutzer im Zeit- und Frequenzbereich. Ein UMTS-Sender zum Beispiel kann für eine Mehrzahl verschiedener Empfänger bestimmte Signale gleichzeitig in einem einzigen Frequenzband übertragen, indem er jedes Symbol mit einer Folge von Werten des Spreizcodes multipliziert, wodurch für jedes Symbol so genannte Chips erhalten werden. Jeder Empfänger rekonstruiert aus den übertragenen Chips den für ihn bestimmten Anteil durch Bilden des Skalarprodukts der empfangenen Chipfolge mit dem ihm zugeordneten Spreizcode. Diese Rekonstruktion ist möglich, weil die verwendeten Spreizcodes in der Regel orthogonal sind, das heißt, das Skalarprodukt zweier Spreizcodes, aufgefasst als Vektoren in einem SF-dimensionalen Vektorraum, ist Null, wobei SF (= Spreizfaktor) die Zahl der Elemente des Spreizcodes beziehungsweise den Spreizfaktor bezeichnet. Eine einfache Trennung der Nutzer ist nur möglich, falls ein synchrones System ohne Mehrwegeausbreitung vorliegt. Gerade bei Mobilfunksysteme, in denen die CDMA-Technik vornehmlich eingesetzt werden soll beziehungsweise schon eingesetzt wird, ist aber mit einer starken Mehrwegeausbreitung zu rechnen. In dem Fall der Mehrwegeausbreitung ist eine einfache Trennung der Signale über den RAKE-Empfänger möglich. Allerdings liegt bei Anwendung des RAKE-Empfängers im Mehrnutzerfall'eine so hohe Bitfehlerrate vor, dass dies zu e'rheblichen Einschränkungen der maximalen Teilnehmerzahl und/oder der nutzbaren Datenrate führt, denn ein Großteil der Datenrate wird dann für Fehlerkorrekturverfahren benötigt. Eine vielversprechende Alternative bieten Multiuser-Detektoren ("Multiuser Detection", S. Verdu, Cambridge University Press, 1998). Diese können die Bitfehlerrate um Größenordnungen senken und gewährleisten damit einen sinnvollen Betrieb des Systems. Allerdings liegen den Multiuser-Detektionsverfahren in der Regel sehr aufwendige mathematische Verfahren zugrunde, die eine hohe Rechenleistung erfordern: Für die bekanntesten Verfahren

- dekorrelierender und MMSE-Multiuser-Detektor (MMSE = Minimum Mean Squared Error) ("Multiuser Detection", S. Verdu, Cambridge University Press, 1998) - steigt deshalb die Rechenkomplexität mit der Anzahl der Nutzer ganz erheblich an.

In den vergangenen Jahren sind zahlreiche Versuche unternommen worden, um die Effektivität der Multiuser-Detektion zu verbessern. Es wurde insbesondere versucht, die Komplexität zu reduzieren, wobei versucht wurde, einen Kompromiss zwischen der Reduzierung der Komplexität und einem Erhalt der Leistungsfähigkeit zu erreichen. Ein Erfolg versprechender Ansatz, um einen solchen Kompromiss zu erreichen, liegt in einem Polynomial-Expansion-Detektor (PE-Detektor) ("Multi-User Detection for DS-CDMA Communications", S. Moshavi, IEEE Communications Magazine, Seiten 124-136, Okt. 1996), durch welchen unter anderem der MMSE-Multiuser-Detektor approximiert werden kann ("Multiuser Detection", S. Verdu, Cambridge University Press, 1998). Ein wichtiges Problem des PE-Detektors ist /die Berechnung der erforderlichen Gewichte des Polynoms. Diese Schwierigkeit kann umgangen werden, indem man einen auf der Taylor-Entwicklung basierenden Weg einschlägt, wie er in "Simplified Polynomial-Expansion Linear Detectors for DS-CDMA", Z. D. Lei und T. J. Lim, Electronics Letters, Vol. 34, Nr, 1, Seiten 1561-1563, Aug. 1998, vorgeschlagen wurde. Der Nachteil dieses Verfahrens besteht jedoch darin, dass die Konvergenz hierbei mit einer sehr geringen Geschwindigkeit erfolgt, das heißt, die Anzahl der Iterationsschritte, mit welcher die Matrix des PE-Detektors gegen die Matrix des MMSE-Multiuser-Detektors konvergiert, ist sehr groß für größere Matrizen. Dadurch ist diese Lösung für den Einsatz in der mobilen Kommunikation praktisch nur bedingt geeignet.

Dennoch stellen die iterativen Multiuser-Detektionen einen interessanten Ansatz dar, um störende Effekte der Multiple Access Interference (MAI) in CDMA-Systemen zu beheben. Bei einer Verbesserung der gegenwärtig verfügbaren Eigenschaften des Detektors könnte damit eine effiziente Methode zur Beseitigung der Multiple Access Interference zur Verfügung gestellt werden. Beispielsweise beschreibt die US-Patentschrift US 5,757,791, "Multistage Linear Receiver for DS-CDMA Systems", eine spezielle Lösung für das Problem der Beseitigung dieser störenden Effekte der Multiple Access Interference in CDMA-Systemen. Hierbei wird der Einsatz eines mehrstufigen Linear-Empfängers vorgeschlagen, dessen einzelne Stufen jeweils die Gesamtmodulation, den rauschfreien Kanal und den Demodulationsprozess nachbilden. Die Ausgangssignale der einzelnen Stufen werden anschließend linear kombiniert, wobei die Gewichte dieser Linearkombination spezifisch gewählt werden können, um verschiedene Empfänger nachzubilden - einschließlich von MMSE-oder dekorrelierenden Detektoren. Ein spezielles Vorgehen, um eine Verbesserung des Approximationsverhaltens durch optimale Wahl eines Normalisierungsfaktors für die System-Matrix zu erreichen, wird jedoch nicht gelehrt.

In der deutschen Offenlegungsschrift DE 198 41 578 A1, "Verfahren und Vorrichtung zur Detektion von CDMA-kodierten Signalen", wird ebenfalls ein mehrstufiges Verfahren und eine entsprechende Vorrichtung zur Durchführung dieses Verfahrens angegeben. Darüber hinaus wird die Verwendung von Normalisierungsfaktoren beschrieben, ohne jedoch insbesondere eine Optimierung unter Berücksichtigung der Eigenwerte der System-Matrix vorzunehmen. Im Allgemeinen macht sich dies in einer schlechten Approximation beziehungsweise in einer großen Anzahl von Iterationsschritten nachteilig bemerkbar.

Vorteile der Erfindung

Die Aufgabe der Erfindung besteht deshalb darin, ein Verfahren, einen Detektor, ein entsprechendes Computerprogramm-Erzeugnis und ein entsprechendes computerlesbares Speichermedium anzugeben, durch welche die erwähnten Nachteile behoben werden und insbesondere eine Verbesserung der Detektionsleistung von CDMA-kodierten und linear übertragenen Signalen, insbesondere im Mobilfunkbereich unter zusätzlicher Berücksichtigung des so genannten Near-Far-Effektes, erreicht und gleichzeitig der gerätetechnische Aufwand der Vorrichtung gegenüber den herkömmlicherweise eingesetzten Detektoren verringert wird.

Diese Aufgabe wird erfindungsgemäß gelöst durch die Merkmale im kennzeichnenden Teil der Ansprüche 1, 8, 21 und 22 im Zusammenwirken mit den Merkmalen im Oberbegriff. Zweckmäßige Ausgestaltungen der Erfindung sind in den Unteransprüchen enthalten.

Ein besonderer Vorteil des Verfahrens zur iterativen Multiuser-Detektion in CDMA-Systemen unter Verwendung von Polynomial-Expansion-Detektoren liegt darin, dass wenigstens ein Teil der Eigenwerte ($\lambda_j(R')$) (j = 1, 2, ..., dim(R')) einer einen PE-Detektor $L_{PE} = \sum_{i=0}^{N_{Iter}} (-w_i R')^i$ beschreibenden Matrix R' näherungsweise ermittelt wird, wobei die $w_i$ (i = 0, ... , $N_{Iter}$) die Gewichte des PE-Detektors darstellen und $N_{Iter}$ die durch vorgebbare Abbruchkriterien bestimmte Anzahl der Iterationsschritte angibt, und/oder die Matrix R' mit einer Diagonal-Matrix D und/oder mit der zur Diagonal-Matrix D inversen Matrix $D^{-1}$ verknüpft wird, wobei die Elemente der Diagonal-Matrix D durch Amplitudenwerte empfangener Nutzersignale bestimmt werden.

Ein Detektor umfasst vorteilhafterweise mindestens einen Chip und/oder einen Prozessor, der (die) derart eingerichtet ist (sind), dass ein Verfahren zur iterativen Multiuser-Detektion in CDMA-Systemen unter Verwendung von Polynomial-Expansion-Detektoren gemäß einem der Ansprüche 1 bis 8 durchführbar ist.

Ein Computerprogramm-Erzeugnis zur iterativen Multiuser-Detektion in CDMA-Systemen unter Verwendung von Polynomial-Expansion-Detektoren umfasst ein computerlesbares Speichermedium, auf dem ein Programm gespeichert ist, das es einem Computer ermöglicht, nachdem es in den Speicher des Computers geladen worden ist, ein Verfahren zur iterativen Multiuser-Detektion in CDMA-Systemen unter Verwendung von Polynomial-Expansion-Detektoren gemäß einem der Ansprüche 1 bis 8 durchzuführen.

Auf einem computerlesbaren Speichermedium zur iterativen Multiuser-Detektion in CDMA-Systemen unter Verwendung von Polynomial-Expansion-Detektoren ist vorteilhafterweise ein Programm gespeichert, das es einem Computer ermöglicht, nachdem es in den Speicher des Computers geladen worden ist, ein Verfahren zur iterativen Multiuser-Detektion in CDMA-Systemen unter Verwendung von Polynomial-Expansion-Detektoren gemäß einem der Ansprüche 1 bis 8 durchzuführen.

Eine bevorzugte Ausführungsform des erfindungsgemäßen Verfahrens sieht vor, dass ein Normalisierungs-faktor $\alpha$ derart aus den ermittelten Eigenwerten ($\lambda_j(R')$) (j = 1, 2, ..., dim(R')) bestimmt wird, dass gilt:

$$\alpha < 2/|\lambda_{max}(R')|$$

mit
$\lambda_{max}(R') = \max\{\lambda_j(R') : j = 1, 2, ..., \dim(R')\}$
und der PE-Detektor aus empfangenen Signalen y eine Symbolschätzung d' wie folgt durchführt:

$$d' = \sum_{i=0}^{N_{Iter}} (-w_i R')^i y_{MF} = \sum_{i=0}^{N_{Iter}} (-\alpha R + I)^i y_{MF} \, ,$$

um einen dekorrelierenden Multiuser-Detektor zu approximieren, oder eine eine Symbolschätzung d' wie folgt durchführt:

$$d' = \sum_{i=0}^{N_{Iter}} (-w_i R')^i y_{MF} = \sum_{i=0}^{N_{Iter}} (-\alpha R - \alpha \sigma^2 I + I)^i y_{MF} \, ,$$

um einen MMSE-Multiuser-Detektor zu approximieren, mit

$y_{MF} = A^H \cdot y$:      Signal nach dem Matched Filter;
A:      System-Matrix;
$R = A^H A$:      Korrelations-Matrix;
$\sigma^2$:      additives Weißes Gaußsches Rauschen (AWGN);
I:      Einheitsmatrix;
$N_{Iter}$:      Anzahl der Iterationsschritte,

wobei $N_{Iter}$ durch vorgebbare Abbruchkriterien bestimmt ist.

Als besonderer Vorteil erweist es sich, dass im Falle eines zu approximierenden dekorrelierenden Multiuser-Detektors der Normalisierungsfaktor ($\alpha$) wie folgt berechnet wird:

$$\alpha = \frac{2}{\lambda_{min}(X) + \lambda_{max}(X)} \, ,$$

mit

$$\lambda_{max}(X) \,\, <= \,\, \max_{t \in (1,m)} \left\{ \sum_{s=1}^{m} |x_{s,t}| \right\} \, ,$$

$$\lambda_{min}(X) \,\, >= \,\, \max \left\{ \min_{t \in (1,m)} \left\{ x_{t,t} - \sum_{s=1,s \neq t}^{m} |x_{s,t}| \right\}, 0 \right\}$$

und

$$X = (x_{s,t}) = R = A^H A.$$

Soll ein MMSE-Multiuser-Detektor approximiert werden, so ergeben sich die Größen $\lambda_{max}(X)$ beziehungsweise $\lambda_{min}(X)$ wie folgt:

$$\lambda_{\max}(X) \ <= \ \max_{l\in(1,m)}\left\{\sum_{s=1}^{m}|x_{s,l}|\right\} \ + \ \sigma^2 \ ,$$

$$\lambda_{\min}(X) \ >= \ \max\left\{\min_{l\in(1,m)}\left\{x_{l,l} - \sum_{s=1,s\neq l}^{m}|x_{s,l}|\right\},0\right\} \ + \ \sigma^2 ,$$

hier
mit

$$X = (x_{s,t}) = R = A^H A.$$

Ein weiterer Vorteil ist darin zu sehen, dass die Verknüpfung der Diagonal-Matrix D mit der Matrix R' folgendermaßen erfolgt:

$$R'^{-1} = \alpha \ (D^{-1} \ D \ \alpha \ R' \ D \ D^{-1})^{-1}$$

$$= \alpha \ D \ (I \ + \ D \ \alpha \ R' \ D \ - \ I)^{-1} \ D$$

$$\approx \alpha D \sum_{i=0}^{N_{Iter}}(-X')^i D \ ,$$

mit R' = $A^H A$ und X' = (D $\alpha$ $A^H A$ D - I) bei Approximation eines dekorrelierenden Multiuser-Detektors oder R' = ($A^H A$ + $\sigma^2$I) und X' = (D $\alpha$ $A^H A$ D + $\sigma^2$I - I) bei Approximation eines MMSE-Multiuser-Detektors.

In einer bevorzugten Ausführungsform des erfindungsgemäßen Verfahrens ist außerdem vorgesehen, dass die Elemente der Diagonal-Matrix D die inversen Amplitudenwerte der empfangenen Nutzersignale angeben.

Von Vorteil ist es ebenfalls, dass die Iteration abgebrochen wird, wenn die Näherungslösung d' eine vorgebbare Güte erreicht hat. Alternativ kann es sich als praktisch erweisen, dass eine feste Anzahl von Iterationsschritten $N_{Iter}$ vorgegeben wird. Das erste Vorgehen hat den Vorteil, dass die Genauigkeit der Approximation vorgegeben, das zweite Vorgehen hat den Vorteil, dass dabei der gerätetechnische Aufwand den jeweiligen Erfordernissen angepasst werden kann.

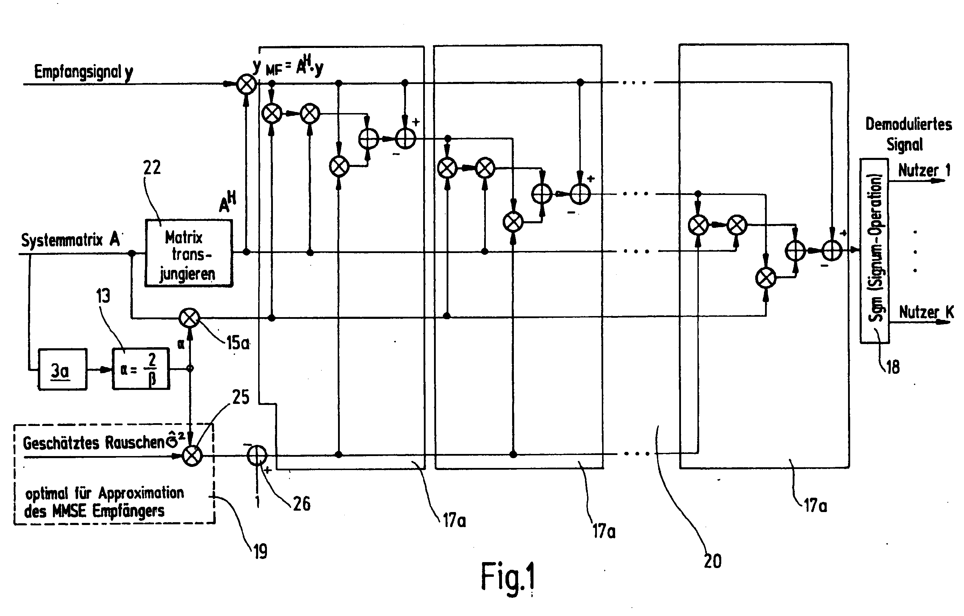

In bevorzugter Ausführungsform des erfindungsgemäßen Detektors ist vorgesehen, dass der Detektor eine Einheit 3a zur System-Matrix-basierten Bestimmung einer Normalisierungshilfsgröße $\beta$ und eine Einheit 13 zur Bestimmung des Normalisierungsfaktors $\alpha$ umfasst, wobei die Einheit 3a einen zum Einlesen der System-Matrix A ausgebildeten Eingang aufweist, der Ausgang der Einheit 3a mit dem Eingang der Einheit 13 verbunden ist und der Ausgang der Einheit 13 mit einem Multiplikator 15a zur Berechnung der Größe $\alpha A$ und der Ausgang des Multiplikators 15a mit jeder Detektorstufe 17a des herkömmlichen, auf der Auswertung der System-Matrix A basierenden PE-Detektors 20 verbunden ist (vergleiche Figur 1).

Darüber hinaus erweist es sich als vorteilhaft, dass die Einheit 3a zur System-Matrix-basierten Bestimmung einer Normalisierungshilfsgröße $\beta$ eine Einheit 4 zur Berechnung der Zeilensumme g der System-Matrix A, eine Einheit 6 zur Berechnung der Größe $z_1 = \left[\sum_{s=1}^{S}|a_{s,1}\cdot g_s|,\ldots,\sum_{s=1}^{S}|a_{s,T}\cdot g_s|\right]^T$ und eine erste Einheit 9a zur Berechnung eines Maximums umfasst, wobei der Eingang der Einheit 3a mit dem Eingang der Einheit 4 zur Berechnung der Zeilensumme g, der Ausgang der Einheit 4 mit dem Eingang der Einheit 6, der Ausgang der Einheit 6 mit dem Eingang der ersten Einheit 9a zur Berechnung eines Maximums und der Ausgang der Einheit 9a mit dem Ausgang der Einheit 3a verbunden ist. Die Verwendung eines solchen Detektors erlaubt bereits eine gute Abschätzung des Normalisierungsfaktors $\alpha$, eine verbesserte Abschätzung liefert ein Detektor, der zusätzlich eine Einheit 23a zur System-Matrix-basierten Berechnung des kleinsten Eigenwertes $\lambda_{min}$ aufweist, wobei die Einheit 23a eine Einheit 5 zur Berechnung der Größe

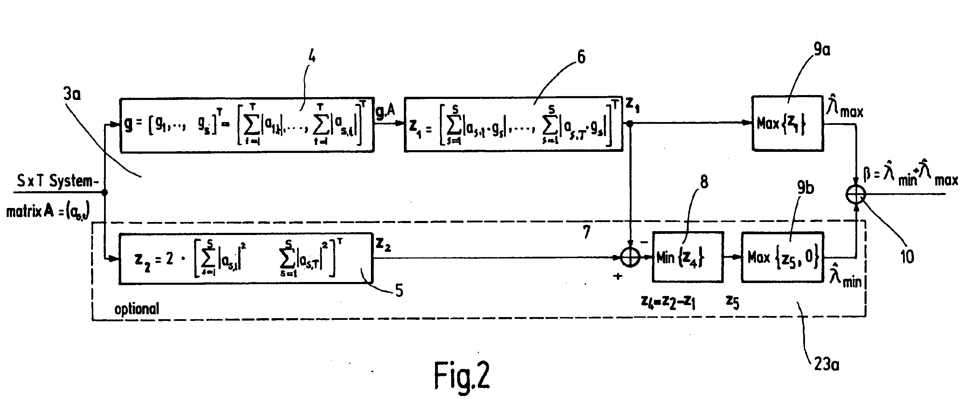

$$z_2 = 2 \cdot \left[ \sum_{s=1}^{S} |a_{s,1}|^2, \ldots, \sum_{s=1}^{S} |a_{s,T}|^2 \right]^T ,$$ eine Einheit 8 zur Berechnung eines Minimums, eine zweite Einheit 9b

zur Berechnung eines Maximums, einen ersten Addierer 7 und einen zweiten Addierer 10 umfasst, der Eingang der Einheit 3a mit dem Eingang der Einheit 5, der erste Addierer 7 zur Berechnung einer Größe $z_4 = z_2 - z_1$ mit dem Ausgang der Einheit 5, dem Ausgang der Einheit 6 und dem Eingang der Einheit 8 zur Berechnung eines Minimums, der Ausgang der Einheit 8 mit dem Eingang der zweiten Einheit 9b zur Berechnung eines Maximums verbunden ist, und der zweite Addierer 10 zur Berechnung der Summe $\beta = \lambda_{max} + \lambda_{min}$ mit dem Ausgang der Einheit 9a, dem Ausgang der Einheit 9b und dem Ausgang der Einheit 3a verbunden ist (vergleiche Figur 2).

Für eine verbesserte Behandlung des so genannten Near-Far-Szenarios erweist es sich bei einer die System-Matrix A benutzenden Berechnung als vorteilhaft, dass der Detektor einen Multiplikator 24 zur Berechnung des Produktes AD aus der System-Matrix A und einer Matrix D aufweist, wobei der Ausgang des Multiplikators 24 mit dem Eingang der Einheit 22 zur Transjugation einer Matrix sowie dem Eingang des Multiplikators 15a zur Berechnung der Größe $\alpha A$ verbunden ist.

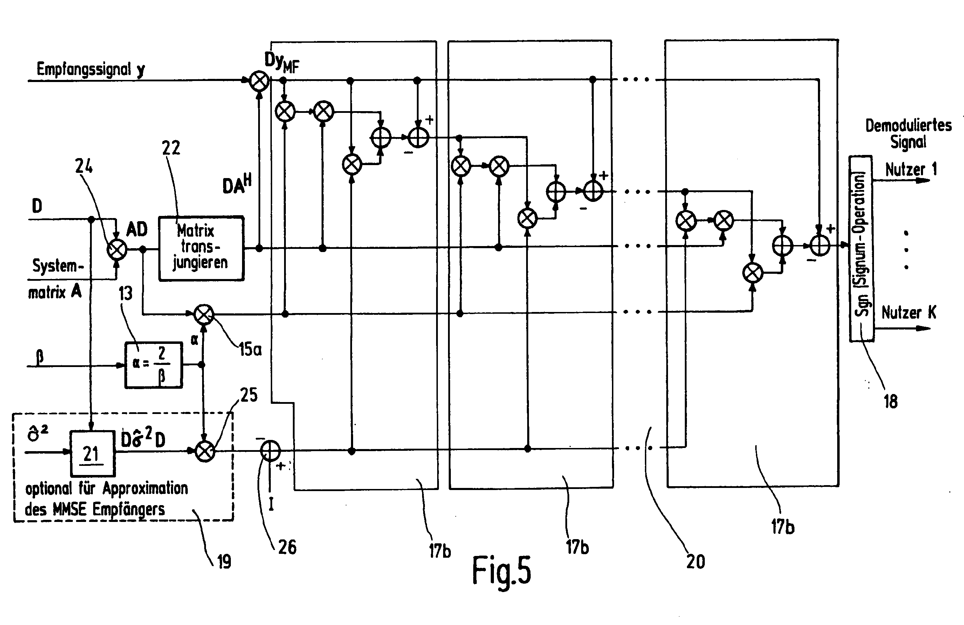

Soll durch den erfindungsgemäßen Detektor ein MMSE-Detektor approximiert werden, so sieht eine bevorzugte Ausführungsform des Detektors vor, dass der Detektor eine Einheit 19 zur Approximation eines MMSE-Detektors umfasst, wobei die Einheit 19 Eingänge für das geschätzte additive Weiße Gaußsche Rauschen $\sigma^2$ und den Normalisierungsfaktor $\alpha$ sowie einen Multiplikator 25 zur Berechnung der Größe $\alpha \sigma^2$ aufweist, der Ausgang des Multiplikators 25 mit einem Addierer 26 zur Berechnung der Summe $(I - \alpha \sigma^2)$ und der Ausgang des Addierers 26 mit jeder Detektorstufe 17a des herkömmlichen, auf der Auswertung der System-Matrix (A) basierenden PE-Detektors 20 verbunden ist (vergleiche Figur 1) . Eine verbesserte Behandlung des Near-Far-Szenarios wird in diesem Falle beispielsweise dadurch erreicht, dass die Einheit 19 zur Approximation eines MMSE-Detektors mit einer Einheit 21 zur Berechnung der Near-Far-Optimierung und einem Eingang zum Einlesen einer Matrix D versehen ist, wobei der Ausgang der Einheit 21 mit dem Eingang des Multiplikators 25 verbunden ist (vergleiche Figur 5) .

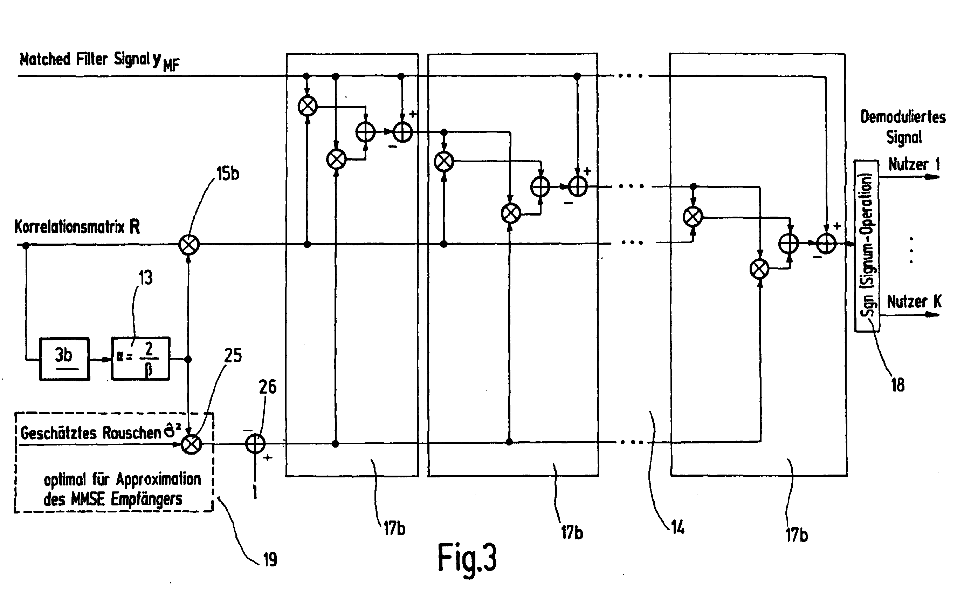

In Abhängigkeit der Systeme wird auch statt der System-Matrix A die Korrelations-Matrix $R = A^H A$ für die weitere Verarbeitung der Signale zur Verfügung gestellt. Für diesen Fall sind an den eben beschriebenen Ausführungsformen des erfindungsgemäßen Detektors lediglich Modifizierungen vorzunehmen, die sich aus der speziellen Gestalt der Korrelations-Matrix R ergeben und leicht den Figuren 3, 4 und 6 zu entnehmen sind.

Ein wesentlicher Vorteil der Erfindung liegt in der Verringerung der Rechenkomplexität im Vergleich zu den herkömmlichen Lösungen. Dadurch wird zum einen die Verarbeitungsgeschwindigkeit der Signale erhöht, zum anderen der gerätetechnische Aufwand für den Detektor reduziert.

Ein weiterer Vorteil des vorgestellten Verfahrens besteht darin, dass es sich sowohl im Handgerät ("Handy") des Nutzers ("Downlink") als auch in der Basisstation ("Uplink") verwenden lässt.

Zeichnungen

Die Erfindung soll nachstehend anhand von einem zumindest teilweise in den Figuren dargestellten Ausführungsbeispiel näher erläutert werden, welches sich speziell auf die lineare Approximation eines MMSE-Detektors bezieht. Es zeigen:

Figur 1    eine Schaltung eines System-Matrix-basierten Detektors;

Figur 2    eine Schaltung zur System-Matrix-basierten Bestimmung der Normalisierungshilfsgröße $\beta$;

Figur 3    eine Schaltung eines Korrelations-Matrix-basierten Detektors;

Figur 4    eine Schaltung zur Korrelations-Matrix-basierten Bestimmung der Normalisierungshilfsgröße $\beta$;

Figur 5    eine Schaltung eines System-Matrix-basierten Detektors mit Einheiten zur Berechnung der Near-Far-Optimierung;

Figur 6    eine Schaltung eines Korrelations-Matrix-basierten Detektors mit Einheiten zur Berechnung der Near-Far-Optimierung und

Figur 7    eine Skizze zur Abhängigkeit der Konvergenzgeschwindigkeit von der Schätzung des größten beziehungsweise kleinsten Eigenwertes (Gershgorin-Kreise).

Beschreibung des Ausführungsbeispiels

Das im Folgenden beispielhaft vorgestellte Verfahren - basierend auf dem Polynomial Expansion beziehungsweise Multistage Ansatz ("Simplified Polynomial-Expansion Linear Detectors for DS-CDMA", Z. D. Lei und T. J. Lim, Electronics Letters, Vol. 34, Nr, 1, Seiten 1561-1563, Aug. 1998), ("Fast Linear Multi-User Detector for DS-CDMA Systems", M. Mozaffripour und R. Tafazolli, Capacity and Range Enhancement Techniques for the Third Generation Mobile Communications and Beyond (IEE Colloquium 2000), Seiten 10/1-10/4, 2000), ("Multi-User Detection for DS-CDMA Communications", S. Moshavi, IEEE Communications Magazine, Seiten 124-136, Okt. 1996) - approximiert iterativ einen MMSE-Empfänger. Das Problem der iterativen Verfahren ist, wie erwähnt, häufig eine langsame Konvergenz gegen die zu approximierende Lösung. Das heißt, es werden viele Iterationsschritte gebraucht, wodurch sich wieder der schaltungstechnische Aufwand erhöht. Die Zahl der Iterationsschritte lässt sich aber reduzieren, falls es gelingt, aus der Matrix, die für den MMSE- beziehungsweise dekorrelierenden Empfänger gebraucht wird, die Eigenwerte zu bestimmen. Die exakte mathematische Berechnung der Eigenwerte ist selbst wieder eine Aufgabe mit hoher Rechenkomplexität, die deshalb nicht wünschenswert ist. In dem erfindungsgemäßen Verfahren wird davon Gebrauch gemacht, dass man die spezielle Struktur der Matrix nutzen kann, um über eine einfache Schaltung die Eigenwerte mit hoher Präzision zu schätzen. Als Basis für diese Abschätzung dient unter anderem das Theorem von Gershgorin ("Matrizen und ihre Anwendungen. Teil 2: Numerische Methoden", R. Zurmühl und S. Falk, Springer Verlag, 5. Auflage, 1986). Mit der Abschätzung lässt sich die Konvergenzgeschwindigkeit erheblich steigern und damit die Anzahl der Iterationen deutlich senken. Die Rechenkomplexität steigt in Abhängigkeit der Nutzerzahl bei dem vorgestellten Verfahren in einem weit geringerem Maße als bei den herkömmlichen Verfahren. Sie stellt somit vor allem bei einem voll ausgelasteten Netz mit einer hohen Anzahl von Nutzern eine erhebliche Reduktion der Rechenkomplexität und damit der Komplexität der Empfängerschaltung dar.

Zunächst sollen jedoch kurz einmal die theoretischen Grundlagen erläutert werden, auf denen die Erfindung beruht.

Hierzu soll ein UTRA-TDD-System zugrunde gelegt werden, mit K Nutzern, deren jedem ein SpreizFaktor der Länge $Q_k$ zugeordnet ist. Das empfangene Basisband-Signal y des Nutzers k kann in einer Vektor/Matrix-Schreibweise wie folgt dargestellt werden:

$$y = Ad + n, \qquad\qquad (1)$$

wobei d die Daten aller Nutzer innerhalb eines Detektionsintervalls, welches auch als Burst bezeichnet wird

$\left( N = \sum_{k=1}^{K} N_k \quad Symbole \right)$, beschreibt und n ein zusätzliches additives Weißes Gaußsches Rauschen (AWGN), welches durch den Kanal verursacht wird, bezeichnet. A stellt die System-Matrix dar, welche in K Matrizen aufgegliedert werden kann:

$$A = [A_1 | \ldots | A_k | \ldots | A_K]. \qquad\qquad (2)$$

Jede Spalte einer solchen $((N_k Q_k + P - 1) \times N)$-Matrix $A_k$ enthält einen Vektor, der aus der verwürfelten Spreiz-Sequenz des Nutzers k herrührt, verknüpft mit der entsprechenden Kanalimpulsantwort. P beschreibt die größte Verzögerungsdauer (in Vielfachen der Chipdauer) der Kanalimpulsantwort. Den Vektor der geschätzten Daten-Symbole d' kann man bestimmen durch die Beziehung:

$$d' = L \cdot y_{MF}, \qquad\qquad (3)$$

wobei $y_{MF} = A^H \cdot y$ das Signal nach dem Matched Filter (MF) und L einen linearen Detektor repräsentiert. $A^H$ ist die zu A transjugierte, das heißt die zu A transponierte und komplex konjugierte, Matrix.

Der PE-Detektor kann iterativ einen linearen dekorrelierenden oder MMSE-Detektor approximieren (vergleiche "Multistage Linear Receivers for DS-CDMA Systems", S. Moshavi, International Journal of Wireless Information Networks, vol. 3, no. 1, Seiten 1-17, 1996). Ein MMSE-Detektor kann durch

$$L_{MMSE} = [R + \sigma^2 I]^{-1} \qquad (4)$$

beschrieben werden. In diesem Ausdruck beschreibt $R = A^H A$ und repräsentiert somit die Matrix, durch welche die Korrelation der System-Matrix A beschrieben wird, $\sigma^2$ ist hierbei die Leistung des AWGN und I ist die Einheits-Matrix.

Im Folgenden wird lediglich die Approximation des MMSE-Detektors erläutert. Für die Approximation eines dekorrelierenden Detektors muss lediglich $\sigma^2 = 0$ gesetzt werden.

Ungünstigerweise erfordert dieser Detektor L, wie ersichtlich, eine Matrizen-Inversion. Die Ausführung dieser Inversion erfordert erneut einen enormen Rechenaufwand. Aus diesem Grund verfolgt man den Ansatz, die Matrizen-Inversion zu umgehen, indem man einen linearen Detektor geeignet durch einen PE-Detektor approximiert. Allgemein kann der PE-Detektor wie folgt geschrieben werden:

$$L_{PE} = \sum_{i=0}^{N_{Iter}} w_i R^{\prime i} , \qquad (5)$$

wobei $N_{Iter} + 1$ die Zahl der Iterationen des PE-Detektors repräsentiert und dadurch die Genauigkeit der Approximation angibt, $w_i$ stellt die Gewichte des PE-Detektors dar. R' und $w_i$ müssen für die Approximation an den MMSE-Detektor passend gewählt werden.

Der PE-Detektor, welcher der beispielhaften Ausführungsform zugrunde liegt, lässt sich durch die folgende Taylor-Reihen-Entwicklung darstellen (R. Bhatia, Matrix Analysis, Springer-Verlag, 1997):

$$(I + X)^{-1} = \sum_{i=0}^{\infty} (-X)^i ,$$

$$\text{für alle X mit } |\lambda_j(X)| < 1 \text{ für alle j}, \qquad (6)$$

wobei $\lambda_j(X)$ den j-ten Eigenwert der Matrix X repräsentiert. Dividiert man nun die rechte Seite der Gleichung (4) durch $\alpha$ ($\alpha > 0$) und setzt das dadurch erhaltene Ergebnis gleich der linken Seite der Gleichung (6), so erhält man:

$$X = \alpha R + \alpha \sigma^2 I - I, \qquad (7)$$

wobei $\alpha$ einen Normalisierungsfaktor darstellt, der bei dem erfindungsgemäßen Verfahren auf neue Weise ermittelt und verwendet wird, um eine schnelle Konvergenz des PE-Detektors gegen den MMSE- beziehungsweise dekorrelierenden Detektor zu erreichen. Indem man die eigentlich unendliche Summe der Taylor-Reihe auf $N_{Iter} + 1$ Summanden beschränkt, kann der MMSE-Detektor durch den PE-Detektor approximiert werden. Mit dieser approximativen Lösung erhält man für die geschätzten Symbole dann den folgenden Ausdruck:

$$d' = \sum_{i=0}^{N_{Iter}} (-X)^i y_{MF} . \qquad (8)$$

In dieser Gleichung (8) sind alle Gewichte $w_i$ des PE-Detektors gleich Eins gesetzt worden. Die Gleichung (8) kann umgeschrieben werden, indem man das Horner-Schema benutzt, so dass dabei lediglich Matrix-Vektor-Multiplikationen erforderlich sind, wodurch sich die Rechenkomplexität deutlich reduziert. Der PE-Detektor selbst kann damit durch ein mehrstufiges System, wie in den Figuren 1 und 3 gezeigt, realisiert werden.

Der Restfehler $R_{d'}$ der in der Gleichung (8) gegebenen Approximation wird durch

$$R_{d'} = \sum_{i=N_{Iter}+1}^{\infty} (-X)^i y_{MF} \tag{9}$$

beschrieben.

Dieser Restfehler $R_{d'}$ kann als ein zusätzliches Rauschen betrachtet werden, welches nicht von dem Verhältnis der Energie je Bit zu der Rauschleistung $E_b/N_0$ abhängt. Bei hohen Werten von $E_b/N_0$ und einer kleinen Anzahl von Iterationsschritten wird dieser Ausdruck zu einer spürbaren Rauschquelle und kann einen so genannten Noise Floor verursachen.

Um sicherzustellen, dass die Reihe (6) konvergiert, ist es erforderlich, dass die Eigenwerte der Matrix X die folgende Bedingung erfüllen:

$|\lambda_j(X)| < 1$ für alle j.

Für den Normalisierungsfaktor $\alpha$ erhält man bei Verwendung des Ausdrucks (7) somit (vergleiche "Simplified Polynomial-Expansion Linear Detectors for DS-CDMA", Z. D. Lei und T. J. Lim, Electronics Letters, Vol. 34, Nr, 1, Seiten 1561-1563, Aug. 1998 und "Fast Linear Multi-User Detector for DS-CDMA Systems", M. Mozaffripour und R. Tafazolli, Capacity and Range Enhancement Techniques for the Third Generation Mobile Communications and Beyond (IEE Colloquium 2000), Seiten 10/1-10/4, 2000):

$$|\alpha\lambda_{max}(R + \sigma^2 I)| < 2 \text{ , d.h.}$$

$$\alpha < \frac{2}{|\lambda_{max}(R) + \sigma^2|} . \tag{10}$$

Die Bestimmung von $\lambda_{max}(R)$ erfordert wiederum einen hohen Rechenaufwand, weshalb $\lambda_{max}(R)$ oft durch eine obere Schranke ersetzt wird:

$$\lambda_{max}(R) <= Spur(R).$$

Die Spur von R Spur(R) kann wiederum einfach berechnet werden. Allerdings tritt hierbei ein anderer Nachteil auf, denn diese so gewählte obere Schranke ist recht ungenau. Diese Ungenauigkeit hat wiederum zur Folge, dass die Approximationsgeschwindigkeit in der Gleichung (8) herabgesetzt wird.

Es kann jedoch eine weitaus bessere Schätzung für den Normalisierungsfaktor $\alpha$ angesetzt werden, welche die Basis des erfindungsgemäßen Verfahrens bildet. Auch hierbei liegen die Eigenwerte zugrunde, genauer gesagt der kleinste und der größte Eigenwert von $(R + \sigma^2 I)$: Nämlich $\lambda_{max}(R + \sigma^2 I)$ beziehungsweise $\lambda_{min}(R + \sigma^2 I)$. Durch diese Abschätzung der Eigenwerte kann der Normalisierungsfaktor $\alpha$ besser bestimmt werden, so dass die Approximation der dekorrelierenden beziehungsweise MMSE-Detektoren mit größerer Geschwindigkeit, das heißt mit weniger Iterationsschritten, erfolgt.

Die in der Erfindung benutzte Schätzung beruht auf dem Satz von Gershgorin (vergleiche E. Kreyszig, Advanced Engineering Mathematics, John Wiley and Sons, Inc., 1962), welcher angibt, dass alle Eigenwerte einer (m,m)-Matrix $R=(r_{s,t})$ innerhalb von m Kreisen liegen, wobei die Mittelpunkte dieser Kreise jeweils genau mit einem der Diagonalelemente der Matrix R zusammenfallen. Der Radius jedes dieser Kreise kann bestimmt werden, indem man die Absolutwerte der übrigen (m-1) Spalten-Elemente aufsummiert (wobei das Verfahren ebenso gut zeilenweise angewendet werden kann).

Somit existiert für jeden Eigenwert $\lambda_j$ mindestens ein t, welches die folgende Ungleichung erfüllt:

$$|r_{t,t} - \lambda_j| \leq \sum_{s=1, s \neq t}^{m} |r_{s,t}| \quad \text{für alle j.} \tag{11}$$

Daraus kann eine obere Schranke für jeden Eigenwert gefunden werden:

$$|\lambda_j| \leq \sum_{s=1}^{m} |r_{s,t}| =: x_t \quad \text{für alle j.} \tag{12}$$

Da $R = A^H A + \sigma^2 I$ gilt, ist die Matrix $(R + \sigma^2 I)$ positiv definit und hermitisch, und somit sind alle Eigenwerte und Diagonalelemente positiv und reell. Aus der Gleichung (12) ist leicht zu erkennen, dass $\lambda_{max} (R + \sigma^2 I)$ kleiner oder gleich $\max_{t \in (1,m)} \{x_j\}$ sein muss, und somit erhält man schließlich für die obere Schranke der Eigenwerte die Beziehung

$$\lambda_{max} (R + \sigma^2 I) <= \max_{t \in (1,m)} \left\{ \sum_{s=1}^{m} |r_{s,t}| \right\} + \sigma^2. \tag{13}$$

Außerdem erhält man auf ganz analoge Weise aus der Gleichung (11) eine untere Schranke für den kleinsten Eigenwert:

$$\lambda_{min} (R + \sigma^2 I) >= \max \left\{ \min_{t \in (1,m)} \left\{ r_{t,t} - \sum_{s=1, s \neq t}^{m} |r_{s,t}| \right\}, 0 \right\} + \sigma^2. \tag{14}$$

Da die Korrelations-Matrix R diagonal-dominant ist, sind die durch Aufsummierung der Absolutwerte der Nicht-Diagonal-Elemente der Matrix-Spalten erhaltenen Radien der "Gershgorin-Kreise" relativ klein. Daraus folgt, dass die Schätzungen für die Eigenwerte - und damit auch für den letztendlich interessanten Normalisierungsfaktor a - sehr nahe an den tatsächlichen Werten liegen.
Die Rechenkomplexität für den PE-Detektor bleibt unter derjenigen der herkömmlichen Verfahren. Sie ist auch nicht größer als die Rechenkomplexität bei einem die Spur(R) verwendenden Verfahren - hier allerdings weist es den Vorteil der höheren Genauigkeit auf.
Die Ungleichung (10) gibt eine Bedingung für die Konvergenz des PE-Detektors an. Es wird nun noch gezeigt, wie der Normalisierungsfaktor $\alpha$ gewählt werden muss, um eine möglichst hohe Approximationsgeschwindigkeit zu erzielen. Die Wahl von $\alpha$ beruht auf dem kleinsten und größten Eigenwert und hat zur Folge, dass die Summanden höherer Ordnung in Gleichung (8) schnell gegen Null konvergieren, so dass für ein gutes Approximationsergebnis des PE-Detektors nur wenige Iterationen benötigt werden.
Zur Bestimmung der Schätzungen für den kleinsten beziehungsweise größten Eigenwert soll die Matrix X etwas genauer betrachtet werden. Es stellt sich heraus, dass die positiven und reellen Eigenwerte von $(\alpha R + \alpha \sigma^2 I)$ um Eins verschoben sind (vergleiche (7)):

$$\lambda_j(\alpha R + \alpha \sigma^2 I) \in (0, 2) \subset R \quad \text{für alle j.} \tag{15}$$

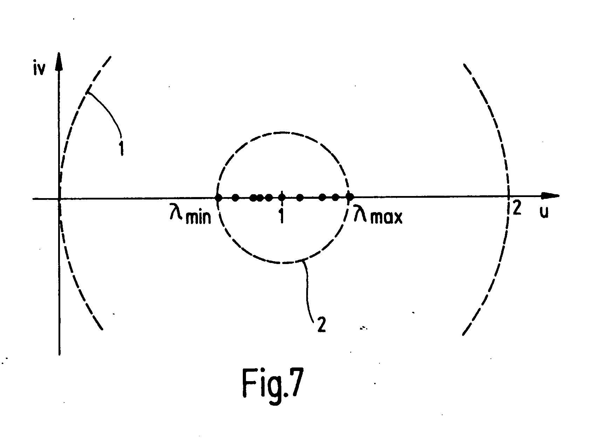

Wenn man nun den optimalen Wert für den Normierungsfaktor $\alpha = \alpha_{opt}$ bestimmen will, muss der Eigenwert $\lambda_j (\alpha R + \alpha \sigma^2 I)$, welcher den größten Abstand von Eins aufweist, minimiert werden. Mit anderen Worten: $\alpha \lambda_{min}(R + \sigma^2 I)$ und $\alpha \lambda_{max} (R + \sigma^2 I)$ müssen so gewählt werden, dass sie von Eins denselben Abstand haben (vergleiche Figur 7). In Figur 7 sind zum einen der Kreis, welcher die Konvergenz des PE-Detektors gewährleistet 1, und zum anderen der Kreis, der die tatsächliche Konvergenzgeschwindigkeit bestimmt 2, angegeben (je kleiner der Kreis, desto höher die Konvergenzgeschwindigkeit). Optimale Konvergenz kann aber nur erreicht werden, wenn die folgende Bedingung erfüllt

ist:

$$\alpha_{opt} = \frac{2}{\lambda_{min}(R + \sigma^2 I) + \lambda_{max}(R + \sigma^2 I)} \quad . \tag{16}$$

Für diese Schätzung von $\alpha_{opt}$ werden die in den Gleichungen (13) und (14) hergeleiteten Schranken benutzt.

Die in (13) und (14) gegebene Abschätzung der Eigenwerte kann mit Hilfe der Dreiecksungleichung auch auf Basis der (SxT)-Matrix A = ($a_{s,t}$) durchgeführt werden:

$$\lambda_{max}(R + \sigma^2 I) <= max\{z_1\},$$

mit

$$z_1 = \left[\sum_{s=1}^{S}|a_{s,1} \cdot g_s|, \ldots, \sum_{s=1}^{S}|a_{s,T} \cdot g_s|\right]^T$$

und mit

$$g = [g_1, \ldots, g_S]^T = \left[\sum_{t=1}^{T}|a_{1,t}|, \ldots, \sum_{t=1}^{T}|a_{S,t}|\right]^T \quad .$$

Analog kann man $\lambda_{min}(R + \sigma^2 I)$ durch folgende vereinfachte Rechnung bestimmen:

$$\lambda_{min}(R + \sigma^2 I) >= max\{min\{z_2 - z_1\}, 0\} + \sigma^2 \quad ,$$

mit

$$z_2 = 2 \cdot \left[\sum_{s=1}^{S}|a_{s,1}|^2, \ldots, \sum_{s=1}^{S}|a_{s,T}|^2\right]^T \quad .$$

Diese Vorgehensweise gestattet es, den Rechenaufwand für die Bestimmung von $\lambda_{min}(R + \sigma^2 I)$ zusätzlich zu reduzieren, indem der bereits bei die Ermittlung von $\lambda_{max}(R + \sigma^2 I)$ berechnete Wert $z_1$ übernommen wird, ohne die Berechnung erneut auszuführen.

Der beispielhaft beschriebene Polynomial Expansion (PE) Multiuser-Detektor kann als ein iterativer Ansatz angesehen werden, um den MMSE-Multiuser-Detektor zu approximieren. Wie aus den mathematischen Grundlagen zu erkennen ist, kann ein solcher PE-Detektor so realisiert werden, dass er eine schnelle Konvergenz - das heißt wenige Iterationsschritte - bei gleichzeitiger hoher Leistungsfähigkeit aufweist, im Vergleich zu MMSE-Multiuser-Detektoren, während seine Rechenkomplexität deutlich unter derjenigen der meisten Multiuser-Detektoren bleibt.

Des Weiteren wird, basierend auf einer Matrixtransformation, eine weitere Verbesserung des oben vorgestellten Verfahrens erreicht. Diese Matrix-Transformation bewirkt, dass auch bei stark unterschiedlichen Empfangsleistungen der einzelnen Nutzer - in einem so genannten "Near-Far-Szenario" - die herkömmlicherweise auftretende Verschlechterung der Bitfehlerrate fast komplett verhindert wird. Das Near-Far-Szenario ist besonders interessant, da die verschiedenen Nutzer in der Regel unterschiedliche Entfernungen zur Basisstation aufweisen und dies zu unterschiedlich starken Empfangssignalen der einzelnen Nutzer führen kann. Dieser Effekt wird durch die sich zum Teil schnell ändernde Mehrwegeausbreitung noch weiter verschärft. Abschwächen lässt sich der Effekt durch eine Leistungsregelung für die einzelnen Nutzer. Allerdings zeigen bereits bestehende Systeme (GSM), dass dies nur zu einer Milderung des Near-Far-Effektes führen kann. Deshalb ist die Erweiterung des Verfahrens zur Erreichung einer hohen Near-Far-Resistenz für den vorgestellten Multiuser-Detektor sehr wichtig.

Die vorgestellten Verfahren lassen sich sowohl im Handgerät ("Handy") des Nutzers ("Downlink") als auch in der Basisstation ("Uplink") verwenden.

Die Unterschiede in der Empfangsleistung an der Basisstation können für die einzelnen Nutzer ganz erheblich sein. Das hängt von der Entfernung'des jeweiligen Nutzers von der Basisstation ab und von Abschirmungen, welche die Kommunikationsverbindung verdecken. Das an der Basisstation eintreffende Signal kann also für einige Nutzer viel schwächer ausfallen als für andere. Eine vollkommene Kontrolle der Empfangsleistung würde die daraus resultierenden Effekte beheben, doch praktisch einsetzbare Methoden erreichen lediglich eine Minderung dieser störenden Effekte. Ein Multiuser-Detektor sollte jedoch dieses so genannte Near-Far-Szenario möglichst gut behandeln können. Ein Multiuser-Detektor, bei dem sich die Dekodierleistung auch in einem Near-Far-Szenario nicht verschlechtert, wird als near-far-resistent bezeichnet. Der dekorrelierende Multiuser-Detektor zum Beispiel ist ein solcher near-far-resistenter Detektor. Deshalb soll die erfindungsgemäße Matrixtransformation beispielhaft an einem dekorrelierenden Multiuser-Detektor $L_{Dec}$ statt an einem MMSE-Multiuser-Detektor $L_{MMSE}$ erläutert werden. Wie oben bereits angemerkt, muss hierzu lediglich $\sigma^2 = 0$ gesetzt werden.

Die bei dem oben beschriebenen Verfahren näherungsweise ausgeführte Inversion bringt in der Regel Ungenauigkeiten mit sich, die auf die geringe Anzahl von Iterationsschritten zurückzuführen sind. Für die Behandlung des Near-Far-Szenarios ist dies besonders kritisch, da der Betrag des Approximationsfehlers schnell in die Nähe der Leistung der schwachen Nutzersignale gelangt. Die schwachen Signale werden dadurch stärker beeinträchtigt als die starken. Man kann dies jedoch umgehen, indem man eine Korrektur-Matrix einführt, die diesen Folgen der (ungenauen) Approximation entgegenwirkt. Hierzu wird eine Diagonal-Matrix D benutzt, die als Haupt - diagonal-Elemente gerade die inversen Werte der Amplituden eines jeden Nutzers aufweist. Durch die folgende Verknüpfung von D mit R wird somit insbesondere eine Verstärkung der schwachen Signale erreicht:

$$L_{Dec} = R^{-1} = \alpha \ (D^{-1} \ D \ \alpha \ R \ D \ D^{-1})^{-1}$$

$$= \alpha \ D \ (I \ + \ D \ \alpha \ R \ D \ - \ I)^{-1} \ D$$

$$\approx \alpha D \sum_{i=0}^{N_{Iter}} (-X')^i D = L_{PE} \ , \qquad (17)$$

wobei $X' = D \ \alpha \ R \ D - I$ gesetzt ist, und D die oben angegebene Diagonal-Matrix beschreibt.

Insbesondere wird erreicht, dass alle Nutzer etwa mit dem gleichen relativen Fehler verknüpft sind. Die Genauigkeit der approximativen Lösung hinsichtlich des Near-Far-Szenarios wird durch die so vorgenommene Transformation erheblich verbessert.

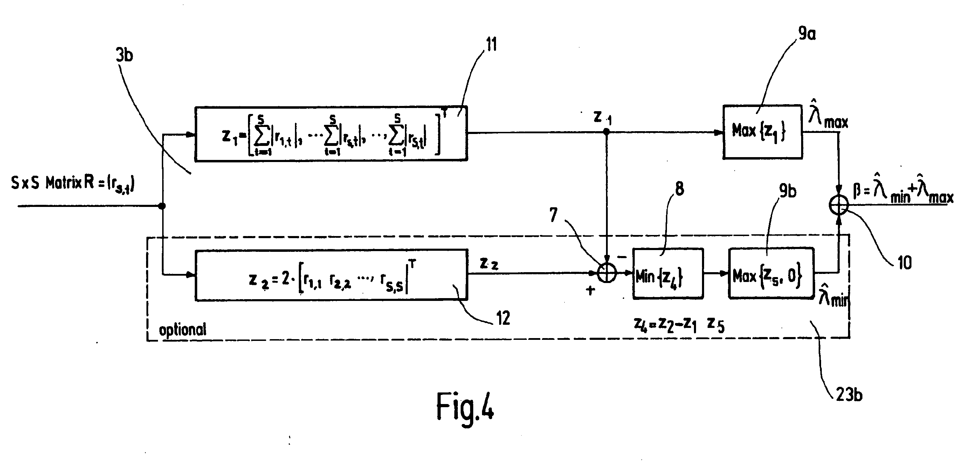

Der erfindungsgemäße Detektor weist eine Einheit zur Bestimmung einer Normalisierungshilfsgröße $\beta$ 3a beziehungsweise 3b auf (vergleiche Figur 2 und 4), wobei durch die Einheit 3a die Normalisierungshilfsgröße $\beta$ aus der System-Matrix A berechnet wird, während die Einheit 3b hierzu die Korrelations-Matrix R benutzt. Für die Einheit zur Bestimmung einer Normalisierungshilfsgröße $\beta$ 3a dient die System-Matrix A als Eingangsgröße, welche in eine Einheit 4 zur Berechnung der Zeilensumme g der System-Matrix A und in eine erste Einheit 5 zur Berechnung der Größe

$$z_2 = 2 \cdot \left[ \sum_{s=1}^{S} |a_{s,1}|^2, \ldots, \sum_{s=1}^{S} |a_{s,T}|^2 \right]^T$$

eingegeben wird. Die Ausgangsgrößen dieser Einheiten ergeben sich zu $g$ beziehungsweise $z_2$. Der Vektor g (und die System-Matrix A) wird anschließend in eine erste Einheit 6 zur Berechnung der Größe

$$z_1 = \left[ \sum_{s=1}^{S} |a_{s,1} \cdot g_s|, \ldots, \sum_{s=1}^{S} |a_{s,T} \cdot g_s| \right]^T$$

eingegeben. Der Ausgang dieser ersten Einheit 6 zur Berechnung der Größe $z_1$ wird in eine erste Einheit 9a zur Berechnung eines Maximums eingegeben. Durch diese Einheit 9a wird der größte Eigenwert $\lambda_{max}$ bestimmt. Die Ausgänge der ersten Einheit 6 zur Berechnung der Größe $z_1$ und der

ersten Einheit 5 zur Berechnung der Größe $z_2$ sind darüber hinaus durch einen ersten Addierer 7 miteinander verknüpft, wobei sich $z_4 = z_2 - z_1$ ergibt. Das Resultat $z_4$ wird in ein Mittel 8 zur Berechnung eines Minimums eingegeben, und der auf diese Weise ermittelte Wert $z_5$ dient schließlich als Eingangswert für eine zweite Einheit 9b zur Berechnung eines Maximums, welche den kleinsten Eigenwert $\lambda_{min}$ als Maximum der Werte $z_5$ und Null ermittelt. Die Ausgangsgrößen dieser Einheiten zur Berechnung eines Maximums 9a und 9b stellen also die gesuchten größten und kleinsten Eigenwerte $\lambda_{max}$ beziehungsweise $\lambda_{min}$ dar (vergleiche Gleichungen (13) und (14)), welche schließlich über einen zweiten Addierer 10 zu $\beta = \lambda_{max} + \lambda_{min}$ berechnet werden.

Die Einheit 3b zur Bestimmung einer Normalisierungshilfsgröße $\beta$, welche $\beta$ aus der Korrelations-Matrix R berechnet, ähnelt in ihrem Aufbau der Einheit 3a. Während die Einheit 3a als Eingangsgröße die System-Matrix A benutzt, dient der Einheit 3b zwar die Korrelations-Matrix R als Eingangsgröße. Da R jedoch aus A hervorgeht, sind keine grundlegenden Änderungen im Aufbau der Einheit vonnöten. Lediglich die ersten Einheiten 4 beziehungsweise 6 zur Berechnung der Zeilensumme g der System-Matrix und zur Berechnung der Größe

$$z_1 = \left[ \sum_{s=1}^{S} \left| a_{s,1} \cdot g_s \right|, \ldots, \sum_{s=1}^{S} \left| a_{s,T} \cdot g_s \right| \right]^T$$

müssen durch eine zweite Einheit 11 zur Berechnung der Größe

$$z_1 = \left[ \sum_{s=1}^{S} \left| r_{1,t} \right|, \ldots, \sum_{s=1}^{S} \left| r_{s,t} \right|, \ldots, \sum_{s=1}^{S} \left| r_{S,t} \right| \right]^T$$

ersetzt werden. Eine zweite Einheit 12 zur Berechnung der Größe

$$z_2 = 2 \cdot [r_{1,1}, r_{2,2} \ldots, r_{s,s}]^T$$

ersetzt die erste Einheit 5 zur Berechnung der Größe

$$z_2 = 2 \cdot \left[ \sum_{s=1}^{S} \left| a_{s,1} \right|^2, \ldots, \sum_{s=1}^{S} \left| a_{s,T} \right|^2 \right]^T$$

. Die Ausgangswerte $z_1$ und $z_2$ dieser beiden Einheiten 11 und 12 werden anschließend ebenso wie in der Einheit 3a zur Bestimmung der Normalisierungshilfsgröße $\beta$ aus der System-Matrix A berechnet.

In einer vereinfachten Ausführung der Einheiten 3a beziehungsweise 3b zur Bestimmung einer Normalisierungshilfsgröße $\beta$ kann auf den Einsatz der Einheiten 23a beziehungsweise 23b zur Berechnung des kleinsten Eigenwerts $\lambda_{min}$ verzichtet werden. Die Bestimmung des kleinsten Eigenwerts $\lambda_{min}$ erhöht lediglich die Genauigkeit der Schätzung von $\alpha$. Da jedoch $\lambda_{min}$ relativ klein ist, ist der Einfluss des kleinsten Eigenwerts auf die Abschätzung nicht von ausschlaggebender Bedeutung.

Die Figuren 1 und 3 zeigen herkömmliche mehrstufige PE-Detektoren 20 beziehungsweise 14, die als zusätzliche Einheit eine Einheit 3a beziehungsweise 3b zur Bestimmung einer Normalisierungshilfsgröße $\beta$ umfassen. Deren Ausgangsgröße $\beta$ wird in der Einheit 13 zur Bestimmung des Normalisierungsfaktors $\alpha$ genutzt, um den Normalisierungsfaktor $\alpha$ zu berechnen. Die Wirkungsweise eines erfindungsgemäßen Detektors soll nun am Beispiel eines die Korrelations-Matrix R nutzenden Detektors 14 näher erläutert werden. Die Stufen dieses PE-Detektors werden von jeweils zwei Multiplikatoren und zwei Addierern gebildet, welche die in der vorangehenden Detektorstufe 17b erzeugte Symbolschätzung d' mit $\alpha R = \alpha A^H A$ und $(I - \alpha \sigma^2 I)$ multiplizieren und anschließend $y_{MF}$ mit den Ausgangsgrößen dieser Rechenoperationen zu $d' = \sum_{i=0}^{N_{Iter}} (-\alpha R - \alpha \sigma^2 I + I)^i y_{MF}$ aufsummiert. Die Ausgangsgröße der letzten Stufe des die Korrelations-Matrix R nutzenden PE-Detektors 14 wird in den Signum-Operator 18 eingegeben, welcher das Signal in Abhängigkeit des Vorzeichens auf 1 beziehungsweise -1 setzt. Das Ausgangssignal des Signum-Operators 18 wird an den Nutzer übertragen.

Die Einheit 19 zur Approximation des MMSE-Detektors entfällt bei der Approximation eines dekorrelierenden Detektors (was nichts anderes heißt, als dass $\sigma^2 = 0$ gesetzt wird [vgl. o.]).

Alternativ zu dem eben beschriebenen Vorgehen kann auch nach jeder Stufe ein Test durchgeführt werden, der die Güte der Ausgangsgröße d' ermittelt und bei Erfüllung eines vorgegebenen Gütekriteriums die Iteration abbricht und die Ausgangsgröße d' der entsprechenden Stufe gleich an den Signum-Operator 18 übergibt, ohne unbedingt alle Iterationsstufen zu durchlaufen.

Im Unterschied zu dem eben beschriebenen, auf der Auswertung der Korrelations-Matrix R basierenden Detektor 14 umfasst ein auf der Auswertung der System-Matrix A basierender Detektor 20 eine Einheit 22 zur Transjugation der System-Matrix A, welche $A^H$ als Ausgangsgröße liefert. Diese Ausgangsgröße dient in dieser beispielhaften Ausführungsform des Detektors 20 (unter Benutzung eines im Vergleich zu dem auf der Auswertung der Korrelations-Matrix R basierenden Detektor 14 zusätzlichen Multiplikators) zur expliziten Berechnung von $y_{MF} = A^H y$ sowie (ebenfalls durch Einsatz eines zusätzlichen Multiplikators) in jeder Detektorstufe 17a zur Berechnung von $R = A^H A$.

Die oben beschriebene Near-Far-Optimierung kann leicht in die eben näher beschriebenen und durch die Figuren 1 und 3 illustrierten Detektoren integriert werden. Hierzu ist für den auf der Auswertung der System-Matrix A basierenden Detektor 20 (Figur 5) lediglich erforderlich, einen Eingang für die Diagonal-Matrix D, einen zusätzlichen Multiplikator 24, der der Einheit 22 zur Transjugation der System-Matrix A vorgeschaltet ist und die Diagonal-Matrix D mit der System-Matrix A multipliziert, sowie eine Einheit 21 zur Berechnung der Near-Far-Optimierung, die das geschätzte Rauschen $\sigma^2$ mit der Diagonal-Matrix D zu $D\sigma^2 D$ verknüpft, bereitzustellen. Die Detektorstufen 17a bleiben dabei unverändert.

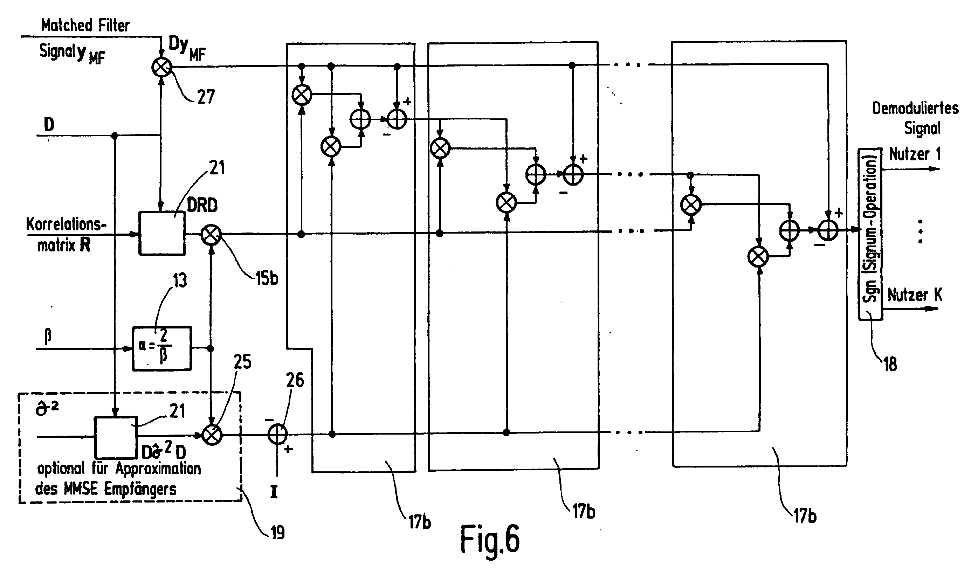

Bei einem auf der Auswertung der Korrelations-Matrix R basierenden Detektor 14 muss für die Near-Far-Optimierung, wie in Figur 6 zu erkennen ist, ebenfalls ein Eingang für die Diagonal-Matrix D und ein zusätzlicher Multiplikator 27 bereitgestellt werden, der das Matched-Filter-Signal $y_{MF}$ mit D zu $Dy_{MF}$ verknüpft. Außerdem müssen in diesem Falle zwei Einheiten 21 zur Berechnung der Near-Far-Optimierung in den Detektor 14 integriert werden, die zum einen das geschätzte Rauschen $\sigma^2$ und zum anderen R mit der Diagonal-Matrix D zu $D\sigma^2 D$ beziehungsweise D R D verknüpfen. Auch hier bleiben die Detektorstufen 17b unverändert.

Simulationsergebnisse, die für Systeme der dritten Mobilfunk-Generation UTRA-TDD durchgeführt wurden, zeigen die Einsatzfähigkeit des Detektors deutlich. Es wurde in diesen Simulationen die Bitfehlerrate (BER) gegen $E_b/N_0$ bestimmt. Selbst in Zeitvarianten Mehrwege-Kanälen konnten die guten Eigenschaften des PE-Detektors nachgewiesen werden. Mit bereits einem Iterationsschritt brachte der erfindungsgemäße PE-Detektor eine höhere Qualität als herkömmliche, auf der Berechnung der Spur von X beruhende PE-Detektoren sie mit 100 Iterationen erreichen. Die Güte der vorgeschlagenen Schätzung für die Eigenwerte zeigte sich in der großen Annäherung an einen MMSE-Multiuser-Detektor nach bereits einem Iterationsschritt.

**Bezugszeichenliste**

1   Kreis, welcher die Konvergenz des PE-Detektors garantiert
2   Kreis, der die Konvergenzgeschwindigkeit des PE-Detektors bestimmt
3a  Einheit zur System-Matrix-basierten Bestimmung einer Normalisierungshilfsgröße $\beta$
3b  Einheit zur Korrelations-Matrix-basierten Bestimmung einer Normalisierungshilfsgröße $\beta$
4   Einheit zur Berechnung der Zeilensumme g der System-Matrix
5   erste Einheit zur Berechnung der Größe $z_2$
6   erste Einheit zur Berechnung der Größe $z_1$
7   erster Addierer
8   Einheit zur Berechnung eines Minimums
9a  erste Einheit zur Berechnung eines Maximums
9b  zweite Einheit zur Berechnung eines Maximums
10  zweiter Addierer
11  zweite Einheit zur Berechnung der Größe $z_1$
12  zweite Einheit zur Berechnung der Größe $z_2$
13  Einheit zur Bestimmung des Normalisierungsfaktors $\alpha$
14  auf der Auswertung der Korrelations-Matrix R basierenden Detektor
15a Multiplikator zur Berechnung der Größe $\alpha A$ beziehungsweise $\alpha AD$
15b Multiplikator zur Berechnung der Größe $\alpha R$ beziehungsweise $\alpha DRD$
16  Addierer
17a Detektorstufe eines auf der Auswertung der Korrelations-Matrix R basierenden Detektors
17b Detektorstufe eines auf der Auswertung der System-Matrix A basierenden Detektors
18  Signum-Operator
19  Einheit zur Approximation des MMSE-Detektors
20  auf der Auswertung der System-Matrix A basierender Detektor
21  Einheit zur Berechnung der Near-Far-Optimierung
22  Einheit zur Transjugation einer Matrix
23a Einheit zur System-Matrix-basierten Berechnung des kleinsten Eigenwertes $\lambda_{min}$
23b Einheit zur Korrelations-Matrix-basierten Berechnung des kleinsten Eigenwertes $\lambda_{min}$
24  Multiplikator zur Berechnung der Größe AD
25  Multiplikator zur Berechnung der Größe $\alpha\sigma^2$ beziehungsweise $\alpha D\sigma^2 D$
26  Addierer zur Berechnung der Summe $I - \alpha\sigma^2$ beziehungsweise $I - \alpha D\sigma^2 D$
27  Multiplikator zur Berechnung des Produktes $Dy_{MF}$

**Patentansprüche**

1. Verfahren zur iterativen Multiuser-Detektion in CDMA-Systemen unter Verwendung von Polynomial-Expansion-Detektoren (PE-Detektoren), wobei wenigstens ein Teil der Eigenwerte ($\lambda_j$(R')) (j = 1, 2, ..., dim(R')) einer einen PE-Detektor $L_{PE} = \sum_{i=0}^{N_{Iter}}(-w_i R')^i$ beschreibenden Matrix (R') näherungsweise ermittelt wird, wobei die ($w_i$) (i = 0, ..., $N_{Iter}$) die Gewichte des PE-Detektors darstellen und ($N_{Iter}$) die durch vorgebbare Abbruchkriterien bestimmte Anzahl der Iterationsschritte angibt, und für einen Normalisierungsfaktor ($\alpha$) gilt

   $\alpha < 2/|\lambda_{max}(R')|$ mit
   
   $\lambda_{max}(R') = \max\{\lambda_j(R') : j = 1, 2, ..., \dim(R')\}$
   
   und der PE-Detektor aus empfangenen Signalen (y) eine Symbolschätzung (d') für $\sum_{i=0}^{N_{Iter}}(-w_i R')^i y_{MF}$ wie folgt durchführt:

   $$d' = \sum_{i=0}^{N_{Iter}}(-\alpha R - \alpha\sigma^2 I + I)^i y_{MF} \quad ,$$

   um einen MMSE-Multiuser-Detektor zu approximieren, mit

   $y_{MF} = A^H \cdot y$: Signal nach dem Matched Filter;
   A: System-Matrix;
   $R = A^H A$: Korrelations-Matrix;
   $\sigma^2$: additives Weißes Gaußsches Rauschen (AWGN);
   I: Einheitsmatrix,

   **dadurch gekennzeichnet, dass** der Normalisierungsfaktor ($\alpha$) aus einem minimalen Eigenwert $\lambda_{min}(X)$ und einem maximalen Eigenwert $\lambda_{max}(X)$ wie folgt berechnet wird:

   $$\alpha = \frac{2}{\lambda_{min}(X) + \lambda_{max}(X)} \quad , \quad \text{mit } X = (x_{s,t}) = R = A^H A \quad .$$

2. Verfahren nach Anspruch 1, **dadurch gekennzeichnet, dass** der minimale Eigenwert $\lambda_{min}(X)$ und/oder der maximale Eigenwert $\lambda_{max}(X)$ wie folgt abgeschätzt wird:

   $$\lambda_{max}(X) <= \max_{t\in(1,m)}\left\{\sum_{s=1}^{m}|x_{s,t}|\right\} + \sigma^2 \quad ,$$

   $$\lambda_{min}(X) >= \max\left\{\min_{t\in(1,m)}\left\{x_{t,t} - \sum_{s=1,s\neq t}^{m}|x_{s,t}|\right\},0\right\} + \sigma^2 \quad .$$

3. Verfahren nach einem der vorhergehenden Ansprüche, **dadurch gekennzeichnet, dass** eine Verknüpfung einer Diagonal-Matrix (D) mit der Matrix (R') folgendermaßen erfolgt:

$$R'^{-1} = \alpha \ (D^{-1} \ D \ \alpha \ R' \ D \ D^{-1})^{-1}$$

$$= \alpha \ D \ (I \ + \ D \ \alpha \ R' \ D \ - \ I)^{-1} \ D$$

$$\approx \alpha D \sum_{i=0}^{N_{Iter}} (-X')^i D \ ,$$

mit $R' = (A^H A + \sigma^2 I)$ , $X' = (D \alpha A^H A D + \sigma^2 I - I)$

4.  Verfahren nach einem der vorhergehenden Ansprüche, **dadurch gekennzeichnet, dass** für einen dekorrelierenden Multiuser-Detektor $\sigma^2 = 0$ gewählt wird.

5.  Verfahren nach einem der Ansprüche 3 und 4, **dadurch gekennzeichnet, dass** die Elemente der Diagonal-Matrix (D) die inversen Amplitudenwerte der empfangenen Nutzersignale angeben.

6.  Verfahren nach einem der vorhergehenden Ansprüche, **dadurch gekennzeichnet, dass** eine feste Anzahl von Iterationsschritten ($N_{Iter}$) vorgegeben wird.

7.  Verfahren nach einem der vorhergehenden Ansprüche, **dadurch gekennzeichnet, dass** die Iteration abgebrochen wird, wenn die Näherungslösung (d') eine vorgebbare Güte erreicht hat.

8.  Detektor mit mindestens einem Chip und/oder Prozessor, der (die) derart eingerichtet ist (sind), dass ein Verfahren zur iterativen Multi-user-Detektion in CDMA-Systemen unter Verwendung von Polynomial-Expansion-Detektoren gemäß einem der Ansprüche 1 bis 7 durchführbar ist.

9.  Detektor nach Anspruch 8, **dadurch gekennzeichnet, dass** der Detektor eine Einheit (3a) zur System-Matrix-basierten Bestimmung einer Normalisierungshilfsgröße ($\beta$) und eine Einheit (13) zur Bestimmung des Normalisierungsfaktors ($\alpha$) umfasst, wobei die Einheit (3a) einen zum Einlesen der System-Matrix (A) ausgebildeten Eingang aufweist, der Ausgang der Einheit (3a) mit dem Eingang der Einheit (13) verbunden ist und der Ausgang der Einheit (13) mit einem Multiplikator (15a) zur Berechnung der Größe ($\alpha$A) und der Ausgang des Multiplikators (15a) mit jeder Detektorstufe (17a) des herkömmlichen, auf der Auswertung der System-Matrix (A) basierenden PE-Detektors (20) verbunden ist.

10.  Detektor nach Anspruch 9, **dadurch gekennzeichnet, dass** die Einheit (3a) zur System-Matrix-basierten Bestimmung einer Normalisierungshilfsgröße ($\beta$) eine Einheit (4) zur Berechnung der Zeilensumme (g) der System-Matrix (A), eine Einheit (6) zur Berechnung der Größe $z_1 = \left[ \sum_{s=1}^{S} |a_{s,1} \cdot g_s|, \ldots, \sum_{s=1}^{S} |a_{s,T} \cdot g_s| \right]^T$ und eine erste Einheit (9a) zur Berechnung eines Maximums umfasst, wobei der Eingang der Einheit (3a) mit dem Eingang der Einheit (4) zur Berechnung der Zeilensumme (g), der Ausgang der Einheit (4) mit dem Eingang der Einheit (6), der Ausgang der Einheit (6) mit dem Eingang der ersten Einheit (9a) zur Berechnung eines Maximums und der Ausgang der Einheit (9a) mit dem Ausgang der Einheit (3a) verbunden ist.

11.  Detektor nach Anspruch 10, **dadurch gekennzeichnet, dass** die Einheit (3a) zur System-Matrix-basierten Bestimmung einer Normalisierungshilfsgröße ($\beta$) neben der Einheit (4) zur Berechnung der Zeilensumme (g) der System-Matrix (A), der Einheit (6) zur Berechnung der Größe $z_1 = \left[ \sum_{s=1}^{S} |a_{s,1} \cdot g_s|, \ldots, \sum_{s=1}^{S} |a_{s,T} \cdot g_s| \right]^T$ und der Einheit (9a) zur Berechnung eines Maximums eine Einheit (23a) zur System-Matrix-basierten Berechnung des kleinsten Eigenwertes ($\lambda_{min}$) aufweist, wobei die Einheit (23a) eine Einheit (5) zur Berechnung der Größe

$$z_2 \quad = \quad 2 \cdot \left[ \sum_{s=1}^{S} |a_{s,1}|^2, \ldots, \sum_{s=1}^{S} |a_{s,T}|^2 \right]^T,$$ eine Einheit (8) zur Berechnung eines Minimums, eine zweite Einheit

(9b) zur Berechnung eines Maximums, einen ersten Addierer (7) und einen zweiten Addierer (10) umfasst, der Eingang der Einheit (3a) mit dem Eingang der Einheit (5), der erste Addierer (7) zur Berechnung einer Größe $z_4 = z_2 - z_1$ mit dem Ausgang der Einheit (5), dem Ausgang der Einheit (6) und dem Eingang der Einheit (8) zur Berechnung eines Minimums, der Ausgang der Einheit (8) mit dem Eingang der zweiten Einheit (9b) zur Berechnung eines Maximums verbunden ist, und der zweite Addierer (10) zur Berechnung der Summe $\beta = \lambda_{max} + \lambda_{min}$ mit dem Ausgang der Einheit (9a), dem Ausgang der Einheit (9b) und dem Ausgang der Einheit (3a) verbunden ist.

12. Detektor nach einem der Ansprüche 8 bis 11, **dadurch gekennzeichnet, dass** der Detektor einen Multiplikator (24) zur Berechnung des Produktes (AD) aus der System-Matrix (A) und einer Matrix (D) aufweist, wobei der Ausgang des Multiplikators (24) mit dem Eingang der Einheit (22) zur Transjugation einer Matrix sowie dem Eingang des Multiplikators (15a) zur Berechnung der Größe ($\alpha$A) verbunden ist.

13. Detektor nach einem der Ansprüche 8 bis 12, **dadurch gekennzeichnet, dass** der Detektor eine Einheit (19) zur Approximation eines MMSE-Detektors umfasst, wobei die Einheit (19) Eingänge für das geschätzte additive Weiße Gaußsche Rauschen ($\sigma^2$) und den Normalisierungsfaktor ($\alpha$) sowie einen Multiplikator (25) zur Berechnung der Größe ($\alpha\,\sigma^2$) aufweist, der Ausgang des Multiplikators (25) mit einem Addierer (26) zur Berechnung der Summe ($I - \alpha\,\sigma^2$) und der Ausgang des Addierers (26) mit jeder Detektorstufe (17a) des herkömmlichen, auf der Auswertung der System-Matrix (A) basierenden PE-Detektors (20) verbunden ist.

14. Detektor nach Anspruch 13, **dadurch gekennzeichnet, dass** die Einheit (19) zur Approximation eines MMSE-Detektors eine Einheit (21) zur Berechnung der Near-Far-Optimierung und einen Eingang zum Einlesen einer Matrix (D) aufweist, wobei der Ausgang der Einheit (21) mit dem Eingang des Multiplikators (25) verbunden ist.

15. Detektor nach Anspruch 8, **dadurch gekennzeichnet, dass** der Detektor eine Einheit (3b) zur Korrelations-Matrix-basierten Bestimmung einer Normalisierungshilfsgröße ($\beta$) und eine Einheit (13) zur Bestimmung des Normalisierungsfaktors ($\alpha$) umfasst, wobei die Einheit (3b) einen zum Einlesen der Korrelations-Matrix (R) ausgebildeten Eingang aufweist, der Ausgang der Einheit (3b) mit dem Eingang der Einheit (13) verbunden ist und der Ausgang der Einheit (13) mit einem Multiplikator (15b) zur Berechnung der Größe ($\alpha$R) und der Ausgang des Multiplikators (15b) mit jeder Detektorstufe (17b) des herkömmlichen, auf der Auswertung der Korrelations-Matrix (R) basierenden PE-Detektors (14) verbunden ist.

16. Detektor nach Anspruch 15, **dadurch gekennzeichnet, dass** die Einheit (3b) zur Korrelations-Matrix-basierten Bestimmung einer Normalisierungshilfsgröße ($\beta$) eine Einheit (11) zur Berechnung der Größe

$$z_1 \quad = \quad \left[ \sum_{s=1}^{S} |r_{1,t}|, \ldots, \sum_{s=1}^{S} |r_{s,t}|, \ldots, \sum_{s=1}^{S} |r_{S,t}| \right]^T$$ und eine erste Einheit (9a) zur Berechnung eines Maximums umfasst, wobei der Eingang der Einheit (3b) mit dem Eingang der Einheit (11), der Ausgang der Einheit (11) mit dem Eingang der ersten Einheit (9a) zur Berechnung eines Maximums und der Ausgang der Einheit (9a) mit dem Ausgang der Einheit (3b) verbunden ist.

17. Detektor nach Anspruch 16, **dadurch gekennzeichnet, dass** die Einheit (3b) zur Korrelations-Matrix-basierten Bestimmung einer Normalisierungshilfsgröße ($\beta$) neben der Einheit (11) zur Berechnung der Größe

$$z_1 \quad = \quad \left[ \sum_{s=1}^{S} |r_{1,t}|, \ldots, \sum_{s=1}^{S} |r_{s,t}|, \ldots, \sum_{s=1}^{S} |r_{S,t}| \right]^T$$ und der Einheit (9a) zur Berechnung eines Maximums eine Einheit (23b) zur Korrelations-Matrix-basierten Berechnung des kleinsten Eigenwertes ($\lambda_{min}$) aufweist, wobei die Einheit (23b) eine Einheit (12) zur Berechnung der Größe $z_2 = 2 \cdot [r_{1,1}, r_{2,2} \ldots, r_{s,s}]^T$, eine Einheit (8) zur Berechnung eines Minimums, eine zweite Einheit (9b) zur Berechnung eines Maximums, einen ersten Addierer (7) und einen zweiten Addierer (10) umfasst, der Eingang der Einheit (3b) mit dem Eingang der Einheit (12), der erste Addierer (7) zur Berechnung einer Größe $z_4 = z_2 - z_1$ mit dem Ausgang der Einheit (11), dem Ausgang der Einheit (12) und dem Eingang der Einheit (8) zur Berechnung eines Minimums, der Ausgang der Einheit (8) mit dem Eingang der zweiten Einheit (9b) zur Berechnung eines Maximums verbunden ist, und der zweite Addierer (10) zur Berechnung der

Summe $\beta = \lambda_{max} + \lambda_{min}$ mit dem Ausgang der Einheit (9a), dem Ausgang der Einheit (9b) und dem Ausgang der Einheit (3b) verbunden ist.

18. Detektor nach einem der Ansprüche 15 bis 17, **dadurch gekennzeichnet, dass** der Detektor eine Einheit (21) zur Berechnung der Near-Far-Optimierung und einen Multiplikator (27) zur Berechnung des Produktes ($Dy_{MF}$) aus einer Matrix (D) und dem Matched Filter Signal ($y_{MF}$) aufweist, wobei der Ausgang der Einheit (21) zur Berechnung der Near-Far-Optimierung mit einem Eingang des Multipli-, kators (15b) zur Berechnung der Größe ($\alpha DRD$) und der Ausgang des Multiplikator (27) mit jeder Detektorstufe (17b) des herkömmlichen, auf der Auswertung der Korrelations-Matrix (R) basierenden PE-Detektors (14) verbunden ist.

19. Detektor nach einem der Ansprüche 15 bis 18, **dadurch gekennzeichnet, dass** der Detektor eine Einheit (19) zur Approximation eines MMSE-Detektors umfasst, wobei die Einheit (19) Eingänge für das geschätzte additive Weiße Gaußsche Rauschen ($\sigma^2$) und den Normalisierungsfaktor ($\alpha$) sowie einen Multiplikator (25) zur Berechnung der Größe ($\alpha \sigma^2$) aufweist, der Ausgang des Multiplikators (25) mit einem Addierer (26) zur Berechnung der Summe (I $- \alpha \sigma^2$) und der Ausgang des Addierers (26) mit jeder Detektorstufe (17b) des herkömmlichen, auf der Auswertung der Korrelations-Matrix (R) basierenden PE-Detektors (14) verbunden ist.

20. Detektor nach Anspruch 19, **dadurch gekennzeichnet, dass** die Einheit (19) zur Approximation eines MMSE-Detektors eine Einheit (21) zur Berechnung der Near-Far-Optimierung und einen Eingang zum Einlesen einer Matrix (D) aufweist, wobei der Ausgang der Einheit (21) mit dem Eingang des Multiplikators (25) zur Berechnung der Größe ($\alpha D\sigma^2 D$) verbunden ist.

21. Computerlesbares Speichermedium mit einem aus Programmcode-Mitteln bestehenden Programm um alle Schritte von jedem beliebigen der Ansprüche 1 bis 7 durchzuführen, wenn das Programm auf einem Computer ausgeführt wird.

22. Computerprogramm-Erzeugnis, das ein computerlesbares Speichermedium mit einem aus Programmcode-Mitteln bestehenden Programm, um alle Schritte von jedem beliebigen der Ansprüche 1 bis 7 durchzuführen, wenn das Programm auf einem Computer ausgeführt wird, umfasst.

**Claims**

1. Method for iterative multiuser detection in CDMA systems using polynomial expansion detectors (PE-detectors), wherein at least a part of the eigenvalues ($\lambda_j(R')$) (j = 1, 2,..., dim(R')) of a matrix (R') describing a PE detector

   $L_{PE} = \sum_{i=0}^{N_{Iter}}(-w_i R')^i$ is approximately determined, with the ($w_i$) (i = 0,..., $N_{Iter}$) representing the weights of the PE detector and ($N_{Iter}$) indicating the number of iteration steps set by given termination criteria and a scaling factor ($\alpha$) being described by

   $\alpha < 2/|\lambda_{max}(R')|$, where
   $\lambda_{max}(R') = \max\{\lambda_j(R') : j = 1, 2,..., \dim(R')\}$

   and the PE detector carrying out a symbol estimation (d') from received signals (y) for $\sum_{i=0}^{N_{Iter}}(-w_i R')^i y_{MF}$ as follows:

   $$d' = \sum_{i=0}^{N_{Iter}}(-\alpha R - \alpha \sigma^2 I + I)^i y_{MF},$$

   in order to approximate an MMSE multiuser detector, where

   $y_{MF} = A^H \cdot y$: signal after the matched filter;
   A: system matrix;
   $R = A^H A$: correlation matrix;
   $\sigma^2$: additive white Gaussian noise (AWGN);
   I: identity matrix,

**18**

**characterized in that** the scaling factor ($\alpha$) is calculated from a minimum eigenvalue $\lambda_{min}(X)$ and a maximum eigenvalue $\lambda_{max}(X)$ as follows:

$$\alpha = \frac{2}{\lambda_{min}(X) + \lambda_{max}(X)} \text{, where } X = (X_{s,t}) = R = A^H A .$$

2. Method according to claim 1, **characterized in that** the minimum eigenvalue $\lambda_{min}(X)$ and/or the maximum eigenvalue $\lambda_{max}(X)$ is estimated as follows:

$$\lambda_{max}(x) <= \max_{t \in (1,m)} \left\{ \sum_{s=1}^{m} |x_{s,t}| \right\} + \sigma^2 ,$$

$$\lambda_{min}(x) >= \max \left\{ \min_{t \in (1,m)} \left\{ x_{t,t} - \sum_{s=1, s \neq t}^{m} |x_{s,t}| \right\}, 0 \right\} + \sigma^2 .$$

3. Method according to any one of the preceding claims, **characterized in that** a combination of a diagonal matrix (D) and the matrix (R') is generated as follows:

$$R'^{-1} = \alpha (D^{-1} D \alpha R' D D^{-1})^{-1}$$

$$= \alpha D (I + D \alpha R' D - I)^{-1} D$$

$$\approx aD \sum_{i=0}^{N_{Iter}} (-X')^i D$$

where R' = ($A^H A + \sigma^2 I$) , X' = (D $\alpha$ $A^H$A D + $\sigma^2$I-I)

4. Method according to any one of the preceding claims, **characterized in that** for a decorrelating multiuser detector is selected: $\sigma^2 = 0$.

5. Method according to any one of the claims 3 and 4, **characterized in that** the elements of the diagonal matrix (D) indicate the inverse amplitude values of the received user signals.

6. Method according to any one of the preceding claims, **characterized in that** the fixed number of iteration steps ($N_{Iter}$) is predetermined.

7. Method according to any one of the preceding claims, **characterized in that** the iteration is terminated as soon as the approximate solution (d') has reached a given performance.

8. Detector with at least one chip and/or processor designed so as to allow for the implementation of a method for iterative multiuser detection in CDMA systems using polynomial expansion detectors according to any one of the claims 1 to 7.

9. Detector according to claim 8, **characterized in that** the detector comprises a unit (3a) for the system matrix based determination of an auxiliary scaling variable ($\beta$) and a unit (13) for the determination of the scaling factor ($\alpha$), with the unit (3a) having an input designed to read in the system matrix (A), the output of the unit (3a) being connected with the input of the unit (13), and the output of the unit (13) being connected with a multiplier (15a) for the calculation of the variable ($\alpha$A), and the output of the multiplier (15a) being connected with each detector stage (17a) of the conventional PE detector (20) which is based on the analysis of the system matrix (A).

10. Detector according to claim 9, **characterized in that** the unit (3a) for the system matrix based determination of an auxiliary scaling variable ($\beta$) comprises a unit (4) for the calculation of the row sum (g) of the system matrix (A), a unit (6) for the calculation of the variable $z_1 = \left[\sum_{s=1}^{S}|a_{s,1} \cdot g_s|, \ldots, \sum_{s=1}^{S}|a_{s,T} \cdot g_s|\right]^T$ and a first unit (9a) for the calculation of a maximum, with the input of the unit (3a) being connected with the input of the unit (4) for the calculation of the row sum (g), the output of the unit (4) being connected with the input of the unit (6), the output of the unit (6) being connected with the input of the first unit (9a) for the calculation of a maximum, and the output of the unit (9a) being connected with the output of the unit (3a).

**11.** Detector according to claim 10, **characterized in that** the unit (3a) for the system matrix based determination of an auxiliary scaling variable ($\beta$) has, in addition to the unit (4) for the calculation of the row sum (g) of the system matrix (A), the unit (6) for the calculation of the variable $z_1 = \left[\sum_{s=1}^{S}|a_{s,1} \cdot g_s|, \ldots, \sum_{s=1}^{S}|a_{s,T} \cdot g_s|\right]^T$ and the unit (9a) for the calculation of a maximum, a unit (23a) for the system matrix based calculation of the smallest eigenvalue ($\lambda_{min}$), with the unit (23a) comprising a unit (5) for the calculation of the variable $z_2 = 2 \cdot \left[\sum_{s=1}^{S}|a_{s,1}|^2, \ldots, \sum_{s=1}^{S}|a_{s,T}|^2\right]^T$, a unit (8) for the calculation of a minimum, a second unit (9b) for the calculation of a maximum, a first adder (7) and a second adder (10), the input of the unit (3a) being connected with the input of the unit (5), the first adder (7) for the calculation of a variable $z_4 = z_2 - z_1$ being connected with the output of the unit (5), the output of the unit (6) and the input of the unit (8) for the calculation of a minimum, the output of the unit (8) being connected with the input of the second unit (9b) for the calculation of a maximum, and the second adder (10) for the calculation of the sum $\beta = \lambda_{max} + \lambda_{min}$, being connected with the output of the unit (9a), the output of the unit (9b) and the output of the unit (3a).

**12.** Detector according to any one of claims 8 to 11, **characterized in that** the detector has a multiplier (24) for the calculation of the product (AD) of the system matrix (A) and a matrix (D), with the output of the multiplier (24) being connected with the input of the unit (22) for the transjugation of a matrix and with the input of the multiplier (15a) for the calculation of the variable ($\alpha$A).

**13.** Detector according to any one of claims 8 to 12, **characterized in that** the detector comprises a unit (19) for the approximation of an MMSE-detector, with the unit (19) having inputs for the estimated additive white Gaussian noise ($\sigma^2$) and the scaling factor ($\alpha$) as well as a multiplier (25) for the calculation of the variable ($\alpha \, \sigma^2$), the output of the multiplier (25) being connected with an adder (26) for the calculation of the sum ($I - \alpha \, \sigma^2$), and the output of the adder (26) being connected with each detector stage (17a) of the conventional PE detector (20) which is based on the analysis of the system matrix (A).

**14.** Detector according to claim 13, **characterized in that** the unit (19) for the approximation of an MMSE detector has a unit (21) for the calculation of the near-far optimization and an input for reading in a matrix (D), with the output of the unit (21) being connected with the input of the multiplier (25).

**15.** Detector according to claim 8, **characterized in that** the detector comprises a unit (3b) for the correlation matrix based determination of an auxiliary scaling variable ($\beta$) and a unit (13) for the determination of the scaling factor ($\alpha$), with the unit (3b) having an input designed to read in the correlation matrix (R), the output of the unit (3b) being connected with the input of the unit (13), and the output of the unit (13) being connected with a multiplier (15b) for the calculation of the variable ($\alpha$R), and the output of the multiplier (15b) being connected with each detector stage (17b) of the conventional PE detector (14) which is based on the analysis of the correlation matrix (R).

**16.** Detector according to claim 15, **characterized in that** the unit (3b) for the correlation matrix based determination of an auxiliary scaling variable ($\beta$) comprises a unit (11) for the calculation of the variable $z_1 = \left[\sum_{s=1}^{S}|r_{1,t}|, \ldots, \sum_{s=1}^{S}|r_{s,t}|, \ldots, \sum_{s=1}^{S}|r_{S,t}|\right]^T$ and a first unit (9a) for the calculation of a maximum, with the input of the unit (3b) being connected with the input of the unit (11), the output of the unit (11) being connected with the input of the first unit (9a) for the calculation of a maximum, and the output of the unit (9a) being connected with the output of the unit (3b).

**17.** Detector according to claim 16, **characterized in that** the unit (3b) for the correlation matrix based determination of an auxiliary scaling variable ($\beta$) has, in addition to the unit (11) for the calculation of the variable

$$z_1 = \left[ \sum_{s=1}^{S} |r_{1,s}|, \ldots, \sum_{s=1}^{S} |r_{s,s}|, \ldots, \sum_{s=1}^{S} |r_{S,s}| \right]^T$$ and the unit (9a) for the calculation of a maximum, a unit (23b) for the correlation matrix based calculation of the smallest eigenvalue $\lambda_{min}$, with the unit (23b) comprising a unit (12) for the calculation of the variable $z_2 = 2 \cdot [r_{1,1}, r_{2,2} \ldots, r_{s,s}]^T$, a unit (8) for the calculation of a minimum, a second unit (9b) for the calculation of a maximum, a first adder (7) and a second adder (10), the input of the unit (3b) being connected with the input of the unit (12), the first adder (7) for the calculation of a variable $z_4 = z_2 - z_1$ being connected with the output of the unit (11), the output of the unit (12) and the input of the unit (8) for the calculation of a minimum, the output of the unit (8) being connected with the input of the second unit (9b) for the calculation of a maximum, and the second adder (10) for the calculation of the sum $\beta = \lambda_{max} + \lambda_{min}$ being connected with the output of the unit (9a), the output of the unit (9b) and the output of the unit (3b).

18. Detector according to any one of claims 15 to 17, **characterized in that** the detector has a unit (21) for the calculation of the near-far optimization and a multiplier (27) for the calculation of the product ($Dy_{MF}$) of a matrix (D) and the matched filter signal ($y_{MF}$), with the output of the unit (21) for the calculation of the near-far optimization being connected with an input of the multiplier (15b) for the calculation of the variable ($\alpha DRD$), and the output of the multiplier (27) being connected with each detector stage (17b) of the conventional PE detector (14) which is based on the analysis of the correlation matrix (R).

19. Detector according to any one of claims 15 to 18, **characterized in that** the detector comprises a unit (19) for the approximation of an MMSE-detector, with the unit (19) having inputs for the estimated additive white Gaussian noise ($\sigma^2$) and the scaling factor ($\alpha$) as well as a multiplier (25) for the calculation of the variable ($\alpha \sigma^2$), the output of the multiplier (25) being connected with an adder (26) for the calculation of the sum ($I - \alpha \sigma^2$), and the output of the adder (26) being connected with each detector stage (17b) of the conventional PE detector (14) which is based on the analysis of the correlation matrix (R).

20. Detector according to claim 19, **characterized in that** the unit (19) for the approximation of an MMSE detector has a unit (21) for the calculation of a near-far optimization and an input for reading in a matrix (D), with the output of the unit (21) being connected with the input of the multiplier (25) for the calculation of the variable ($\alpha D\sigma^2 D$).

21. Machine-readable storage medium with a program consisting of source code means to implement all steps of each of any one of the claims 1 to 7 when the program is executed on a computer.

22. Computer program product, comprising a machine-readable storage medium with a program consisting of source code means to implement all steps of each of any one of the claims 1 to 7 when the program is executed on a computer.

**Revendications**

1. Procédé pour la détection itérative multi-utilisateurs dans des systèmes AMDC en utilisant des détecteurs à expansion polynomiale (détecteurs EP), procédé dans lequel on détermine de façon approximative au moins une partie des valeurs propres ($\lambda_j(R')$) (j = 1, 2, ..., dim(R')) d'une matrice (R') décrivant un détecteur EP $L_{EP} = \sum_{i=0}^{N_{Iter}} (-w_i R')^i$, avec les ($w_i$) (i = 0, ..., $N_{Iter}$) représentant les poids du détecteur EP et ($N_{Iter}$) indiquant le nombre des pas d'itération défini par des critères de terminaison donnés, et un facteur de cadrage ($\alpha$) étant décrit par
a < 2/| $\lambda_{max}(R')$ | avec
$\lambda_{max}(R') = \max \{\lambda_j(R') : j = 1, 2,..., \dim (R')\}$,

et le détecteur EP effectuant une estimation de symbole (d') pour $\sum_{i=0}^{N_{Iter}} (-w_i R')^i y_{MF}$ à partir de signaux reçus (y) comme suit :

$$d' = \sum_{i=0}^{N_{Iter}} (-\alpha R - \alpha \sigma^2 I + I)^i y_{MF} ,$$

afin d'approximer un détecteur multi-utilisateurs EQMM, avec

$y_{MF} = A^{H} \cdot y$ : signal après le filtre adapté ;

A : matrice du système ;

$R = A^{H}A$ : matrice de corrélation ;

$\sigma^2$ : bruit blanc gaussien additif (BBGA) ;

I : matrice identité ;

**caractérisé en ce que** le facteur de cadrage ($\alpha$) se calcule à partir d'une valeur propre minimale $\lambda_{min}(X)$ et une valeur propre maximale $\lambda_{max}(X)$ comme suit :

$$\alpha = \frac{2}{\lambda_{min}(X) + \lambda_{max}(X)} \text{, avec } X = (X_{s,t}) = R = A^{H}A .$$

2. Procédé selon la revendication 1, **caractérisé en ce que** la valeur propre minimale $\lambda_{min}(X)$ et/ou la valeur propre maximale $\lambda_{max}(X)$ est estimée comme suit :

$$\lambda_{max}(x) <= \max_{t \in (1,m)} \left\{ \sum_{s=1}^{m} |x_{s,t}| \right\} + \sigma^2 \ ,$$

$$\lambda_{min}(x) >= \max \left\{ \min_{t \in (1,m)} \left\{ x_{t,t} - \sum_{s=1, s \neq t}^{m} |x_{s,t}| \right\}, 0 \right\} + \sigma^2 .$$

3. Procédé selon l'une des revendications précédentes, **caractérisé en ce qu'**une composition d'une matrice diagonale (D) et la matrice (R') s'effectue comme suit :

$$R'^{-1} = \alpha \ (D^{-1} \ D \ \alpha \ R' \ D \ D^{-1})^{-1}$$

$$= \alpha \ D \ (I + D \ \alpha \ R' \ D - I)^{-1} \ D$$

$$\approx a D \sum_{i=0}^{N_{Iter}} (-X')^i D \ ,$$

avec R' = $(A^{H}A + \sigma^2 I)$, X' = $(D \ \alpha \ A^{H}A \ D + \sigma^2 I - I)$

4. Procédé selon l'une des revendications précédentes, **caractérisé en ce qu'**on choisit $\sigma^2 = 0$ pour un détecteur multi-utilisateurs décorrélateur.

5. Procédé selon l'une des revendications 3 et 4, **caractérisé en ce que** les éléments de la matrice diagonale (D) indiquent les valeurs d'amplitude inverses des signaux reçus des utilisateurs.

6. Procédé selon l'une des revendications précédentes, **caractérisé en ce que** le nombre des pas d'itération ($N_{Iter}$) est prédéfini.

7. Procédé selon l'une des revendications précédentes, **caractérisé en ce qu'**on termine l'itération dés que la solution approximative (d') atteint une performance donnée.

8. Détecteur avec au moins une puce et/ou un processeur aménagé(e)/aménagés de façon à ce qu'elle/il/ils permette (nt) l'exécution d'un procédé pour la détection itérative multi-utilisateurs dans des systèmes AMDC en utilisant des détecteurs à expansion polynomiale selon l'une des revendications 1 à 7.

9. Détecteur selon la revendication 8, **caractérisé en ce que** le détecteur comprend une unité (3a) pour la détermination - basée sur la matrice du système - d'une grandeur auxiliaire de cadrage ($\beta$) ainsi qu'une unité (13) pour la détermination du facteur de cadrage ($\alpha$), avec l'unité (3a) comportant une entrée adaptée pour la lecture de la matrice du système (A), la sortie de l'unité (3a) étant connectée avec l'entrée de l'unité (13), et la sortie de l'unité (13) étant connectée avec un multiplieur (15a) pour le calcul de la grandeur ($\alpha A$), et la sortie du multiplieur (15a) étant connectée avec chaque étage de détecteur (17a) du détecteur EP conventionnel (20) basé sur l'évaluation de la matrice du système (A).

10. Détecteur selon la revendication 9, **caractérisé en ce que** l'unité (3a) pour la détermination - basée sur la matrice du système - d'une grandeur auxiliaire de cadrage (β) comprend une unité (4) pour le calcul de la somme de ligne (g) de la matrice du système (A), une unité (6) pour le calcul de la grandeur $z_1 = \left[ \sum_{s=1}^{S} |a_{s,1} \cdot g_s|, \ldots, \sum_{s=1}^{S} |a_{s,T} \cdot g_s| \right]^T$ et une première unité (9a) pour le calcul d'un maximum, avec l'entrée de l'unité (3a) étant connectée avec l'entrée de l'unité (4) pour le calcul de la somme de ligne (g), la sortie de l'unité (4) étant connectée avec l'entrée de l'unité (6), la sortie de l'unité (6) étant connectée avec l'entrée de la première unité (9a) pour le calcul d'un maximum, et la sortie de l'unité (9a) étant connectée avec la sortie de l'unité (3a).

11. Détecteur selon la revendication 10, **caractérisé en ce que** l'unité (3a) pour la détermination - basée sur la matrice du système - d'une grandeur auxiliaire de cadrage (β) comprend, outre l'unité (4) pour le calcul de la somme de ligne (g) de la matrice du système (A), l'unité (6) pour le calcul de la grandeur $z_1 = \left[ \sum_{s=1}^{S} |a_{s,1} \cdot g_s|, \ldots, \sum_{s=1}^{S} |a_{s,T} \cdot g_s| \right]^T$ et l'unité (9a) pour le calcul d'un maximum, une unité (23a) pour le calcul - basé sur la matrice du système - de la valeur propre minimale ($\lambda_{min}$), avec l'unité (23a) comprenant une unité (5) pour le calcul de la grandeur $z_2 = 2 \cdot \left[ \sum_{s=1}^{S} |a_{s,1}|^2, \ldots, \sum_{s=1}^{S} |a_{s,T}|^2 \right]^T$, une unité (8) pour le calcul d'un minimum, une deuxième unité (9b) pour le calcul d'un maximum, un premier additionneur (7) et un deuxième additionneur (10), l'entrée de l'unité (3a) étant connectée avec l'entrée de l'unité (5), le premier additionneur (7) pour le calcul d'une grandeur $z_4 = z_2 - z_1$ étant connecté avec la sortie de l'unité (5), la sortie de l'unité (6) et l'entrée de l'unité (8) pour le calcul d'un minimum, la sortie de l'unité (8) étant connectée avec l'entrée de la deuxième unité (9b) pour le calcul d'un maximum, et le deuxième additionneur (10) pour le calcul de la somme $\beta = \lambda_{max} + \lambda_{min}$ étant connecté avec la sortie de l'unité (9a), la sortie de l'unité (9b) et la sortie de l'unité (3a).

12. Détecteur selon l'une des revendications 8 à 11, **caractérisé en ce que** le détecteur comporte un multiplieur (24) pour le calcul du produit (AD) de la matrice du système (A) et une matrice (D), avec la sortie du multiplieur (24) étant connectée avec l'entrée de l'unité (22) pour la transjugaison d'une matrice et l'entrée du multiplieur (15a) pour le calcul de la grandeur (αA).

13. Détecteur selon l'une des revendications 8 à 12, **caractérisé en ce que** le détecteur comprend une unité (19) pour l'approximation d'un détecteur EQMM, avec l'unité (19) comportant des entrées pour le bruit blanc gaussien additif ($\sigma^2$) estimé et le facteur de cadrage (α) ainsi qu'un multiplieur (25) pour le calcul de la grandeur ($\alpha\sigma^2$), la sortie du multiplieur (25) étant connectée avec un additionneur (26) pour le calcul de la somme ($I - \alpha \sigma^2$), et la sortie de l'additionneur (26) étant connectée avec chaque étage de détecteur (17a) du détecteur EP conventionnel (20) basé sur l'évaluation de la matrice du système (A).

14. Détecteur selon la revendication 13, **caractérisé en ce que** l'unité (19) pour l'approximation d'un détecteur EQMM comporte une unité (21) pour le calcul de l'optimisation champ proche-champ lointain et une entrée pour la lecture d'une matrice (D), avec la sortie de l'unité (21) étant connectée avec l'entrée du multiplieur (25).

15. Détecteur selon la revendication 8, **caractérisé en ce que** le détecteur comprend une unité (3b) pour la détermination - basée sur la matrice de corrélation - d'une grandeur auxiliaire de cadrage (β) ainsi qu'une unité (13) pour la détermination du facteur de cadrage (α), avec l'unité (3b) comportant une entrée adaptée pour la lecture de la matrice de corrélation (R), la sortie de l'unité (3b) étant connectée avec l'entrée de l'unité (13), et la sortie de l'unité (13) étant connectée avec un multiplieur (15b) pour le calcul de la grandeur (αR), et la sortie du multiplieur (15b) étant connectée avec chaque étage de détecteur (17b) du détecteur EP conventionnel (14) basé sur l'évaluation de la matrice de corrélation (R).

16. Détecteur selon la revendication 15, **caractérisé en ce que** l'unité (3b) pour la détermination - basée sur la matrice de corrélation - d'une grandeur auxiliaire de cadrage (β) comprend une unité (11) pour le calcul de la grandeur $z_1 = \left[ \sum_{s=1}^{S} |r_{1,s}|, \ldots, \sum_{s=1}^{S} |r_{s,t}|, \ldots, \sum_{s=1}^{S} |r_{S,s}| \right]^T$ et une première unité (9a) pour le calcul d'un maximum, avec l'entrée de l'unité (3b) étant connectée avec l'entrée de l'unité (11), la sortie de l'unité (11) étant connectée avec l'entrée de la première unité (9a) pour le calcul d'un maximum, et la sortie de l'unité (9a) étant connectée avec la sortie de l'unité (3b).

17. Détecteur selon la revendication 16, **caractérisé en ce que** l'unité (3b) pour la détermination - basée sur la matrice de corrélation - d'une grandeur auxiliaire de cadrage ($\beta$) comporte, outre l'unité (11) pour le calcul de la grandeur

$$z_1 = \left[ \sum_{s=1}^{S}|r_{1,s}|,...,\sum_{s=1}^{S}|r_{s,s}|,...,\sum_{s=1}^{S}|r_{S,s}| \right]^T$$ et l'unité (9a) pour le calcul d'un maximum, une unité (23b) pour le calcul - basé sur la matrice de corrélation - de la valeur propre minimale ($\lambda_{min}$), avec l'unité (23b) comprenant une unité (12) pour le calcul de la grandeur $z_2 = 2\ [r_{1,1},\ r_{2,2}\ ...,r_{s,s}]^T$, une unité (8) pour le calcul d'un minimum, une deuxième unité (9b) pour le calcul d'un maximum, un premier additionneur (7) et un deuxième additionneur (10), l'entrée de l'unité (3b) étant connectée avec l'entrée de l'unité (12), le premier additionneur (7) pour le calcul d'une grandeur $z_4 = z_2 - z_1$ étant connecté avec la sortie de l'unité (11), la sortie de l'unité (12) et l'entrée de l'unité (8) pour le calcul d'un minimum, la sortie de l'unité (8) étant connectée avec l'entrée de la deuxième unité (9b) pour le calcul d'un maximum, et le deuxième additionneur (10) pour le calcul de la somme $\beta = \lambda_{max} + \lambda_{min}$ étant connecté avec la sortie de l'unité (9a), la sortie de l'unité (9b) et la sortie de l'unité (3b).

18. Détecteur selon l'une des revendications 15 à 17, **caractérisé en ce que** le détecteur comporte une unité (21) pour le calcul de l'optimisation de l'effet d'éblouissement et un multiplieur (27) pour le calcul du produit ($Dy_{MF}$) d'une matrice (D) et le signal du filtre adapté ($y_{MF}$), avec la sortie de l'unité (21) pour le calcul de l'optimisation de l'effet d'éblouissement étant connectée avec une entrée du multiplieur (15b) pour le calcul de la grandeur ($\alpha DRD$), et la sortie du multiplieur (27) étant connectée avec chaque étage de détecteur (17b) du détecteur EP conventionnel (14) basé sur l'évaluation de la matrice de corrélation (R).

19. Détecteur selon l'une des revendications 15 à 18, **caractérisé en ce que** le détecteur comprend une unité (19) pour l'approximation d'un détecteur EQMM, avec l'unité (19) comportant des entrées pour le bruit blanc gaussien additif ($\sigma^2$) estimé et le facteur de cadrage ($\alpha$) ainsi qu'un multiplieur (25) pour le calcul de la grandeur ($\alpha\ \sigma^2$), la sortie du multiplieur (25) étant connectée avec un additionneur (26) pour le calcul de la somme ($I - \alpha\ \sigma^2$), et la sortie de l'additionneur (26) étant connectée avec chaque étage de détecteur (17b) du détecteur EP conventionnel (14) basé sur l'évaluation de la matrice de corrélation (R).

20. Détecteur selon la revendication 19, **caractérisé en ce que** l'unité (19) pour l'approximation d'un détecteur EQMM comporte une unité (21) pour le calcul de l'optimisation de l'effet d'éblouissement et une entrée pour la lecture d'une matrice (D), avec la sortie de l'unité (21) étant connectée avec l'entrée du multiplieur (25) pour le calcul de la grandeur ($\alpha\ D\sigma^2 D$).

21. Support d'enregistrement lisible par ordinateur avec un programme constitué de moyens de code source pour effectuer toutes les étapes de chacune des revendications quelconques 1 à 7 lorsque le programme est exécuté sur un ordinateur.

22. Produit « programme d'ordinateur », comprenant un support d'enregistrement lisible par ordinateur avec un programme constitué de moyens de code source pour effectuer toutes les étapes de chacune des revendications quelconques 1 à 7 lorsque le programme est exécuté sur un ordinateur.

Fig.1

Emptangsignal y

$y_{MF} = A^H \cdot y$

Systemmatrix A

22 Matrix trans- jungieren

$A^H$

13 $\alpha = \dfrac{2}{\beta}$

3a

$\alpha$

15a

Geschätztes Rauschen $\hat{\sigma}^2$

25

26

optimal für Approximation des MMSE Empfängers

19

17a

17a

20

17a

Demoduliertes Signal

Nutzer 1

Sgn (Signum-Operation)

Nutzer K

18

EP 1 376 885 B1

25

**Fig.2**

Fig.3

S x S Matrix $R = [r_{s,t}]$

3b

$z_1 = \left[ \sum_{t=1}^{S} |r_{1,t}|, \cdots, \sum_{t=1}^{S} |r_{s,t}|, \cdots, \sum_{t=1}^{S} |r_{S,t}| \right]^T$

11

$z_1$

Max $\{z_1\}$

9a

$\hat{\lambda}_{max}$

$\beta = \hat{\lambda}_{min} + \hat{\lambda}_{max}$

10

$z_2 = 2 \cdot \left[ r_{1,1}, r_{2,2}, \cdots, r_{S,S} \right]^T$

12

$z_2$

7

$+$  $-$

Min $\{z_4\}$

8

$z_4 = z_2 - z_1$   $z_5$

Max $\{z_5, 0\}$

9b

$\hat{\lambda}_{min}$

23b

optional

Fig.4

Fig.5

Empfangssignal y

Demoduliertes Signal
Nutzer 1
· · ·
Nutzer K

Sgn (Signum-Operation) — 18

17b

17b

17b

20

$D_{y_{MF}}$

$DA^H$

Matrix
transponieren

22

AD

24

System-
matrix A

D

$\alpha := \frac{2}{\beta}$

13

β

α

15a

25

26

$D\hat{\sigma}^2 D$

21

$\hat{\sigma}^2$

19

optional für Approximation
des MMSE Empfängers

29

Fig.6

EP 1 376 885 B1

Fig.7